# EUROPEAN PATENT APPLICATION

(11) **EP 1 944 174 A1**
(43) Date of publication of application: **16.07.2008**
(21) Application number: 06821910.4
(22) Date of filing: 18.10.2006
(51) Int. Cl.: B41N 1/14, B41C 1/10, C09D 11/02, G03F 7/00, G03F 7/004

(54) **LITHOGRAPHIC PRINTING PLATE MATERIAL, LITHOGRAPHIC PRINTING PLATE, METHOD FOR PREPARING LITHOGRAPHIC PRINTING PLATE, AND METHOD FOR PRINTING BY LITHOGRAPHIC PRINTING PLATE**

(30) Priority: 01.11.2005 JP 2005318100
(71) Applicant: Konica Minolta Medical & Graphic, Inc., Hino-shi, Tokyo 191-8511 (JP)
(72) Inventor: SAMPEI, Takeshi, Tokyo 163-0512 (JP)
(74) Representative: Gille Hrabal Struck Neidlein Prop Roos
(86) International application number: PCT/JP2006/320708
(87) International publication number: WO 2007/052470

(57) **Abstract**

This invention provides a lithographic printing plate material that is excellent in contamination recovery and halftone dot quality and is less likely to cause printing troubles by dust adherence or the like. The lithographic printing plate material comprises an aluminum base material and an image forming function layer provided on the aluminum base material, the image forming function layer containing a photo-thermal conversion material, a photopolymerizable compound, and a polymerization initiator. The lithographic printing plate material is **characterized in that** the image forming function layer in its non-image part can be removed by, after image-wise exposure, supplying a printing ink containing at least one material selected from polymerizable monomers and polymerizable oligomers. There are also provided a lithographic printing plate, a method for preparing the lithographic printing plate, and a method for printing by a lithographic printing plate.

## Description

### FIELD OF THE INVENTION

The present invention relates to a planographic printing plate material, a planographic printing plate, a planographic printing plate preparing process and a printing process employing a planographic printing plate.

### TECHNICAL BACKGROUND

An inexpensive printing plate material for CTP (Computer to Plate) systems, which can be easily handled and has a printing capability comparable to that of PS plates, is required for digitization of printing data.

In recent years, a so-called processless printing plate material has been desired from the viewpoints of environmental protection, which does not require development employing specific chemicals. Thus, a printing process (see for example Patent Document 1) has been noticed which comprises the steps of mounting a printing plate material after image formation on a printing press without treating with any specific processing chemicals, and supplying a dampening solution and printing ink to the printing plate material to remove unnecessary portions, i.e., non-image portions and obtain a printing plate for subsequent printing.

As a method of overcoming problem in that it takes a long time from when supply of printing ink and/or dampening solution begins until when good image quality prints are obtained in a printing process employing a processless planographic printing plate material, proposed is a method employing a specific ink (see for example, Patent Document 2). However, the problem is not still solved that stains once adhered on non-image portions of a planographic printing plate are difficult to remove the non-image portions by even supply of dampening solution, i.e., stain elimination property is poor. Further, there are problems that dot quality and image quality of prints are not satisfactory and printing fault due to adhered foreign matter is likely to occur. A printing process overcoming these problems has been strongly required.
Patent Document 1: Japanese Patent O.P.I. Publication No. 4-261539
Patent Document 2: Japanese Patent O.P.I. Publication No. 2005-193655

### DISCLOSURE OF THE INVENTION

### PROBLEMS TO BE SOLVED BY THE INVENTION

The present invention has been made in view of the above. An object of the invention is to provide a planographic printing plate material and a planographic printing plate which excel in ink stain elimination property and in dot quality, and are difficult to produce printing fault due to foreign matter adhesion, and to provide a process of preparing the planographic printing plate and a printing process employing the planographic printing plate.

### MEANS FOR SOLVING THE ABOVE PROBLEMS

The above object of the invention can be attained by one of the following constitutions.
1. A planographic printing plate material comprising an aluminum support and provided thereon, an image formation layer containing a light-to-heat conversion material, a photopolymerizable compound, and a polymerization initiator, characterized in that non-image portions of the image formation layer after imagewise exposure can be removed by supplying printing ink containing at least one selected from a polymerizable monomer and a polymerizable oligomer.
2. A planographic printing plate material comprising an aluminum support and provided thereon, an image formation layer containing a light-to-heat conversion material, a photopolymerizable compound, and a polymerization initiator, characterized in that the image formation layer can be removed on a printing press by printing ink containing at least one selected from a polymerizable monomer and a polymerizable oligomer.
3. The planographic printing plate material of item 1 or 2 above, characterized in that the aluminum support has a hydrophilic surface.
4. The planographic printing plate material of any one of items 1 through 3 above, characterized in that the printing ink further contains vegetable oil.
5. A planographic printing plate characterized in that it is prepared by imagewise exposing a planographic printing plate material comprising an aluminum support and provided thereon, an image formation layer containing a light-to-heat conversion material, a photopolymerizable compound, and a polymerization initiator, and supplying printing ink containing at least one selected from a polymerizable monomer and a polymerizable oligomer to the exposed planographic printing plate material.
6. The planographic printing plate of item 5 above, characterized in that the aluminum support has a hydrophilic surface.
7. The planographic printing plate of item 5 or 6 above, characterized in that the printing ink further contains vegetable oil.
8. A process of preparing a planographic printing plate characterized in that the process prepares the planographic printing plate of any one of items 5 through 7 above, and the printing ink containing at least one selected from a polymerizable monomer and a polymerizable oligomer.
9. A printing process employing a planographic printing plate characterized in that the process comprises supplying printing ink containing at least one selected from a polymerizable monomer and a polymerizable oligomer to the planographic printing plate of any one of items 5 through 7, whereby printing is conducted.

### EFFECTS OF THE INVENTION

The present invention can provide a planographic printing plate material and a planographic printing plate which excel in ink stain elimination property and dot quality, and are difficult to produce printing fault due to foreign matter adhesion, a process of preparing the planographic printing plate, and a printing process employing the planographic printing plate.

### PREFERRED EMBODIMENT OF THE INVENTION

The present inventor has found that a planographic printing plate material excels in ink stain elimination property and dot quality and is difficult to produce printing fault due to foreign matter adhesion, which comprises an aluminum support and provided thereon, an image formation layer containing a light-to-heat conversion material, a photopolymerizable compound and a polymerization initiator, wherein non-image portions of the image formation layer after imagewise exposure can be removed by supplying printing ink containing at least one selected from a polymerizable monomer and a polymerizable oligomer.

The planographic printing plate material of the invention comprising an aluminum support and provided thereon, an image formation layer containing a light-to-heat conversion material, a photopolymerizable compound and a polymerization initiator is characterized in that the image formation layer can be removed on a printing press by printing ink containing at least one selected from a polymerizable monomer and a polymerizable oligomer.

The present invention will be explained in detail below.

### [Light-to-heat conversion material]

The planographic printing plate material of the invention has an image formation layer on an aluminum support, and the image formation layer contains a light heat conversion material.

The light-to-heat conversion material is one which generates heat due to imagewise exposure wherein an image is formed on the image formation layer by action of the generated heat. As the light heat conversion material, there is infrared absorbing dye or pigment.

### (Infrared absorbing dye)

Examples of the Infrared absorbing dye include a general infrared absorbing dye such as a cyanine dye, a chloconium dye, a polymethine dye, an azulenium dye, a squalenium dye, a thiopyrylium dye, a naphthoquinone dye or an anthraquinone dye, and an organometallic complex such as a phthalocyanine compound, a naphthalocyanine compound, an azo compound, a thioamide compound, a dithiol compound or an indoaniline compound.

Exemplarily, the light-heat conversion materials include compounds disclosed in Japanese Patent O.P.I. Publication Nos. 63-139191, 64-33547, 1-160683, 1-280750, 1-293342, 2-2074, 3-26593, 3-30991, 3-34891, 3-36093, 3-36094, 3-36095, 3-42281, 3-97589 and 3-103476. These compounds may be used singly or in combination.

### (Pigment)

Examples of pigment include carbon, graphite, a metal and a metal oxide.

Furnace black and acetylene black is preferably used as the carbon. The graininess (d₅₀) thereof is preferably not more than 100 nm, and more preferably not more than 50 nm.

The graphite is one having a particle size of preferably not more than 0.5 µm, more preferably not more than 100 nm, and most preferably not more than 50 nm.

As the metal, any metal can be used as long as the metal is in a form of fine particles having preferably a particle size of not more than 0.5 µm, more preferably not more than 100 nm, and most preferably not more than 50 nm. The metal may have any shape such as spherical, flaky and needle-like. Colloidal metal particles such as those of silver or gold are particularly preferred.

As the metal oxide, materials having black color in the visible regions, or electro-conductive materials or semi-conductive materials can be used. Examples of the materials having black color in the visible regions include black iron oxide (Fe₃O₄), and black complex metal oxides containing at least two metals. Black complex metal oxides comprised of at least two metals are preferred. Typically, the black complex metal oxides include complex metal oxides comprising at least two selected from Al, Ti, Cr, Mn, Fe, Co, Ni, Cu, Zn, Sb, and Ba. These can be prepared according to the methods disclosed in Japanese Patent O.P.I. Publication Nos. 9-27393, 9-25126, 9-237570, 9-241529 and 10-231441. The complex metal oxide used in the invention is preferably a complex Cu-Cr-Mn type metal oxide or a Cu-Fe-Mn type metal oxide. The Cu-Cr-Mn type metal oxides are preferably subjected to the treatment disclosed in Japanese Patent O.P.I. Publication Nos. 8-27393 in order to reduce isolation of a 6-valent chromium ion.

These complex metal oxides have a high light heat conversion efficiency. The primary average particle size of these complex metal oxides is preferably from 1.0 µm or less,
and more preferably from 0.01 to 0.5 µm. The primary average particle size of not more than 1 µm improves light heat conversion efficiency relative to the addition amount of the particles, and the primary average particle size of from 0.01 to 1.0 µm further improves a light heat conversion efficiency relative to the addition amount of the particles. The light heat conversion efficiency relative to the addition amount of the particles greatly depends on a dispersity of the particles, and well-dispersed particles have high light heat conversion efficiency. Accordingly, it is preferred that these complex metal oxide particles are separately dispersed according to a known dispersing method before added to a coating liquid to prepare a particle dispersion liquid (paste). The metal oxides having a primary average particle size of less than 0.01 µm are not preferred since they are difficult to disperse. A dispersant is optionally used for dispersion. The addition amount of the dispersant is preferably from 0.01 to 5% by weight, and more preferably from 0.1 to 2% by weight, based on the weight of the complex metal oxide particles. Kinds of the dispersant are not specifically limited, but the dispersant is preferably a silicon-contained surfactant containing a silicon atom.

Examples of the electro-conductive materials or semiconductive materials include Sb-doped SnO₂ (ATO), Sn-added In₂O₃ (ITO), TiO₂, TiO prepared by reducing TiO₂ (titanium oxide nitride, generally titanium black). Particles prepared by covering a core material such as BaSO₄, TiO₂, 9Al₂O₃·2B₂O and K₂O·nTiO₂ with these metal oxides is usable. The particle size of these particles is preferably not more than 0.5 µm, more preferably not more than 100 nm, and most preferably not more than 50 nm.

The especially preferred light heat conversion materials are the above-described infrared absorbing dyes or the black complex metal oxides comprised of at least two metal oxides.

The addition amount of the light heat conversion materials is preferably 0.1 to 50% by weight, more preferably 1 to 30% by weight, and most preferably 3 to 25% by weight based on the weight of the layer to which the material are added.

### [Photopolymerizable compound]

The photopolymerizable compound used in the invention comprises a monomer/prepolymer having an ethylenically unsaturated bond which is capable of polymerizing by action of actinic light.

Examples of the photopolymerizable monomer/polymer include a monofunctional acrylate such as 2-ethylhexyl acrylate, 2-hydroxyethyl acrylate or 2-hydroxypropyl acrylate or its derivative, or a methacrylate, itaconate, crotonate or maleate alternative of the above acrylate; a bifunctional acrylate such as polyethylene glycol diacrylate, pentaerythritol diacrylate, bisphenol A diacrylate, or diacrylate of hydroxypivalic acid neopentyl glycol-ε-caprolactone adduct or its derivative, or a methacrylate, itaconate, crotonate or maleate alternative of the above diacrylate; and a polyfunctional acrylate such as trimethylolpropane tri(meth)acrylate, dipentaerythritol pentaacrylate, dipentaerythritol hexacrylate, pyrrogallol triacrylate or its derivative or a methacrylate, itaconate, crotonate or maleate alternative of the above polyfunctional acrylate. As a resin having an ethylenically unsaturated bond, so-called a prepolymer, which is obtained by incorporating acrylic acid or methacrylic acid in an oligomer with an appropriate molecular weight to give a photopolymerizable property, can be suitably employed. As other photopolymerizable compound, compounds disclosed in Japanese Patent O.P.I. Publication Nos. 61-6649 and 62-173295, compounds disclosed in (0085) through (0097) of Japanese Patent O.P.I. Publication No. 2005-41206, compounds described on pages 286 to 294 of "11290 Chemical compounds" edited by Kagakukogyo Nipposha and compounds described on pages 11 to 65 of "UV·EB Koka Handbook (Materials)" edited by Kobunshi Kankokai can be preferably used.

Details such as chemical structure, single use, combination use or addition amount of the photopolymerizable compound contained in the image formation layer are suitably designed in accordance with final performance of planographic printing plate material. For example, the photopolymerizable compound is selected from the following viewpoints.

A chemical structure in which the unsaturated group content per one molecule is more is preferred, and in most cases, a chemical structure in which the unsaturated group content per one molecule is two or more is preferred. In order to increase strength of image portions, i.e., cured layer, compounds having a chemical structure in which the unsaturated group content per one molecule is three or more are preferably used. Further, compounds having a chemical structure in which the unsaturated group content per one molecule is different or compounds having a different polymerizable group (for example, acrylates, methacrylates, styrene compounds or vinyl ether compounds) can be used in combination, whereby both sensitivity and layer strength are adjusted.

Selection of the photopolymerizable compound is important in view of its compatibility with other components (for example, a binder polymer, a polymerization initiator, or a colorant, etc.) or its dispersion property in the image formation layer. For example, in some cases the compatibility is improved by use of a low purity compound or combined use of two or more kinds of the compound. The compound with a specific structure is sometimes selected in order to improve adhesion to an aluminum support or a protective layer described later.

The photopolymerizable compound content of the image formation layer is preferably from 5 to 80% by weight, and more preferably from 25 to 75% by weight. The photopolymerizable compound may be used singly or as a mixture of two or more kinds thereof. Further, the chemical structure or addition amount of the photopolymerizable compound can be suitably selected from the standpoint of polymerization inhibition due to oxygen, resolution, fogging property, refractive index change or surface adhesive property. Optionally, upper layer coating or lower layer coating can be carried out.

### [Binder polymer]

In the invention, a binder polymer can be used in order to improve layer property or on-press developability of the image formation layer. A conventional known polymer can be used without any limitations as the binder polymer, and a linear organic polymer having a layer formation property is preferred. Examples of the binder polymer include acryl resin, polyvinyl acetal resin, polyurethane resin, polyurea resin, polyimide resin, polyamide resin, epoxy resin, methacryl resin, polystyrene resin, novolak type phenol resin, polyester resin, synthetic rubber, and natural rubber.

The binder polymer preferably has a crosslinking property in increasing layer strength of image portions. In order to give crosslinking property to the binder polymer, a crosslinkable functional group such as an ethylenically unsaturated bond is incorporated into the main or side chain of polymers. The incorporation of the crosslinkable functional group can be carried out by copolymerization or polymer reaction.

Examples of a polymer having in the main chain an ethylenically unsaturated bond include poly(1,4-butadiene) and poly(1,4-isoprene).

Examples of a polymer having in the side chain an ethylenically unsaturated bond include an acrylic acid ester or amide polymer or a methacrylic acid ester or amide polymer in which a part of the ester or amide residue (R of -COOR or -CONHR) poly(1,4-butadiene) is substituted with an ethylenically unsaturated bond.

As the ethylenically unsaturated bond (R described above), there are listed -(CH₂)nCR₁=CR₂R₃, -(CH₂O)ₙCH₂CR₁=CR₂R₃, -(CH₂CH₂O)nCH₂CR₁=CR₂R₃, -(CH₂)nNH-CO-O-CH₂CR₁=CR₂R₃, -(CH₂)n-O-CO-CR₁=CR₂R₃ and -(CH₂CH₂O)₂-X (in which R₁ through R₃ independently represent a hydrogen atom, a halogen atom, an alkyl group having a carbon atom number of from 1 to 20, an aryl group, an alkoxy group or an aryloxy group, provided that R₁ and R₂ or R₁ and R₃ may combine with each other to form a ring; n represents an integer of from 1 to 10; and X represents a dicyclopentadienyl group).

Typical examples of the ester residue include -CH₂CH=CH₂, -CH₂CH₂O-CH₂CH=CH₂, -CH₂C(CH₃)=CH₂, -CH₂CH=CH-C₆H₅, -CH₂CH₂OCOCH=CH-C₆H₅, -CH₂CH₂OCOC(CH₃)=CH₂, -CH₂CH₂OCOCH=CH₂, -CH2CH2-NHCOO-CH₂CH=CH₂, and -CH₂CH₂O-X (in which X represents a dicyclopentadienyl group).

Typical examples of the amide residue include -CH₂CH=CH₂, -CH₂CH₂-Y (in which Y represents a cyclohexene residue), and -CH₂CH₂-OCO-CH=CH₂.

The binder polymer having a crosslinking property addition polymerizes by addition of a radical (a polymerization initiator radical or a propagation radical from the polymerizable compound generated during polymerization) to the crosslinking functional group where the polymer polymerizes directly or through a polymerization chain derived from the polymerizable compound, whereby the polymer is crosslinked and hardened. Or an atom (for example, a hydrogen atom on a carbon atom adjacent to the functional crosslinking group) in the binder polymer is extracted to form polymer radicals, whereby the polymer radicals combine with each other and the polymer is crosslinked and hardened.

The crosslinking group content (the content of the radically polymerizable unsaturated double bond measured by iodine titration technique) of the binder polymer is preferably from 0.1 to 10.0 mmol per g of binder polymer, more preferably from 1.0 to 7.0 mmol per g of binder polymer, and most preferably from 2.0 to 5.5 mmol per g of binder polymer. The above range of the crosslinking group content provides good sensitivity and storage stability.

It is preferred that the binder polymer has high solubility or dispersibility to ink or dampening solution in improving on-press developability of image formation layer at unexposed portions.

In order to improve solubility or dispersibility to ink, the binder polymer is preferably oleophilic, and in order to improve solubility or dispersibility to dampening solution, the binder polymer is preferably hydrophilic. Accordingly, combined use of an oleophilic binder polymer and a hydrophilic binder polymer is effective in the invention.

Examples of the hydrophilic binder polymer include ones having in the molecule a hydroxyl group, a carboxyl group, a carboxylate group, a hydroxyethyl group, a polyoxyethyl group, a hydroxypropyl group, a polyoxypropyl group, an amino group, an aminopropyl group, an ammonium group, an amido group, a carboxymethyl group, a sulfonic acid group and a phosphate group.

Typical examples of the binder polymer include gum arabic, casein, gelatin, starch derivatives, carboxymethylcellulose or its sodium salt, cellulose acetate, sodium alginate, vinyl acetate-maleic acid copolymers, styrene-maleic acid copolymers, polyacrylates or their salts, polymethacrylates or their salts, a homopolymer or copolymer of hydroxyethyl methacrylate, a homopolymer or copolymer of hydroxyethyl acrylate, a homopolymer or copolymer of hydroxypropyl methacrylate, a homopolymer or copolymer of hydroxypropyl acrylate, a homopolymer or copolymer of hydroxybutyl methacrylate, a homopolymer or copolymer of hydroxybutyl acrylate, polyethylene glycols, hydroxypropylene polymers, polyvinyl alcohols, hydrolyzed polyvinyl acetate having a hydrolysis degree of not less than 60% by weight, and preferably not less than 80% by weight, polyvinyl formal, polyvinyl butyral, polyvinyl pyrrolidone, a homopolymer or copolymer of acrylamide, a homopolymer or copolymer of methacrylamide, a homopolymer or copolymer of N-methylolacrylamide, polyvinyl pyrrolidone, alcohol-soluble nylon, and polyether of 2,2-bis-(4-hydroxyphenyl)-propane and epichlorohydrin.

The polymer binder has a weight average molecular weight of preferably not less than 5,000, and more preferably from 10,000 to 300,000. The polymer binder has a number average molecular weight of preferably not less than 1,000, and more preferably from 2,000 to 250,000. The dispersion degree (weight average molecular weight/number average molecular weight) of the binder polymer is preferably from 1.1 to 10.

The binder polymer may be any of a random polymer, a blocked polymer or a grafted polymer, but is preferably a random polymer.

The binder polymer can be synthesized according to a conventional method. A binder polymer having a crosslinkable group in the side chain can be easily synthesized according to radical polymerization or polymer reaction. As a radical polymerization initiator used in the radical polymerization, a known compound such as an azo initiator or a peroxide initiator can be used. Solvents used in the synthesis include tetrahydrofuran, ethylene dichloride, cyclohexanone, acetone, methanol, ethanol, ethylene glycol monomethyl ether, ethylene glycol monoethyl ether, 2-methoxyethyl acetate, diethylene glycol dimethyl ether, 1-methoxy-2-propanol, 1-methoxy-2-propyl acetate, N,N-dimethylformamide, N,N-dimethylacetamide, toluene, ethyl acetate, methyl lactate, ethyl lactate, dimethylsulfoxide and water. These solvents may be used singly or as an admixture of two or more kinds thereof.

The binder polymers may be used singly or as an admixture of two or more kinds thereof.

The binder polymer content is preferably from 10 to 90% by weight, more preferably from 20 to 80% by weight, and still more preferably from 30 to 70% by weight, based on the solid content of image formation material. The range of the binder polymer content provides good strength of image portions and good image formation properties.

The content ratio by weight of polymerizable compound to binder polymer is preferably from 1/9 to 7/3.

### [Polymerization initiator]

The polymerization initiator used in the invention is one which generates a radical by action of light and/or heat and initiates curing reaction of the photopolymerizable compound described above, so-called a photopolymerization initiator or a thermal polymerization initiator. In the invention, a thermal polymerization, which is thermally decomposed to generate a radical, is preferably used, since a light-to-heat conversion material is used in combination.

As the polymerization initiator in the invention, an onium salt, a halogen atom-containing triazine compound (triazine derivatives disclosed in Japanese Patent Publication Nos. 59-1281 and 61-9621, and Japanese Patent O.P.I. Publication No. 60-60104), an iron-arene complex and bisimidazole (such as 2,4,5-triarylimidazole dimer disclosed in Japanese Patent O.P.I. Publication Nos. 55-127550 and 60-202437) are preferably used.

As the onium salt, there are an iodonium salt, a sulfonium salt, a phosphonium salt, a stannonium salt, an oxazolium salt. The preferred onium salt is a compound represented by formula (I), (II), (III), or (IV) below.

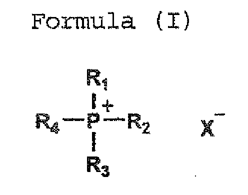

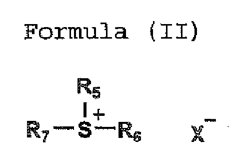

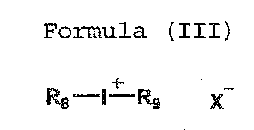

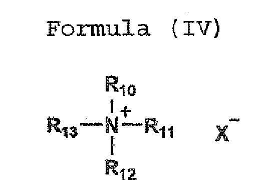

In formulae above, R₁ through R₄ and R₁₀ through R₁₃ independently represent an alkyl group, an aryl group or an aralkyl group, provided that R₁ through R₄ and R₁₀ through R₁₃ may combine with each other to form a ring. R₅, R₆ and R₇ independently represent an alkyl group or an aryl group, provided that R₅ through R₇ may combine with each other to form a ring. R₈ and R₉ independently represent an aryl group. X⁻ represents a counter anion.

### Compound represented by formula (I)

A phosphonium salt compound (hereinafter also referred to as the phosphonium salt in the invention) represented by formula (I) will be explained.

Examples of the group represented by R₁ through R₄ are as follows.

Examples of the alkyl group include a straight-chained or branched alkyl group, e.g., a methyl group, an ethyl group, a butyl group, an i-butyl group, a hexyl group, an octyl group or a stearoyl group. An alkyl group having a carbon atom number of from 1 to 10 is preferred, and a butyl group is especially preferred in view of color density. These alkyl groups may combine with each other to form a ring. The preferred cycloalkyl group is one having a carbon atom number of from 5 to 7 (for example, a cyclopentyl group or a cyclohexyl group).

Examples of the aryl group include a phenyl group and a naphthyl group, and examples of the aralkyl group include a benzyl group and a phenetyl group.

These groups may have further a substituent. Examples of the substituent include a halogen atom, a cyano group, a nitro group, an alkyl group, an aryl group, a hydroxyl group, an amino group (including an alkyl-substituted amino group), an alkoxy group, a carbamoyl group, and -COOR or -OCOR (R represents an organic group such as an alky group or an aryl group).

The counter anion represented by X- is not limited, as long as it is a monovalent anion. The counter anion is preferably a halogen ion, and more preferably a chloride anion or a bromide anion in view of color density. Examples of the counter anion include bromide, chloride, iodide, fluoride, perchlorate, benzoate, thiocyanate, acetate, trifluoroacetate, hexafluorophosphate, nitrate and salicynate.

### Compound represented by formula (II)

A sulfonium salt compound (hereinafter also referred to as the sulfonium salt in the invention) represented by formula (II) will be explained.

Examples of the group represented by R₅ through R₇ are as follows.

Examples of the alkyl group include a straight-chained or branched alkyl group, e.g., a methyl group, an ethyl group, a butyl group, an i-butyl group, a hexyl group, an octyl group or a stearoyl group. An alkyl group having a carbon atom number of from 1 to 10 is preferred, and a butyl group is especially preferred in view of color density. These alkyl groups may combine with each other to form a ring. The preferred cycloalkyl group is one having a carbon atom number of from 5 to 7 (for example, a cyclopentyl group or a cyclohexyl group).

Examples of the aryl group include a phenyl group and a naphthyl group.

As a ring which is formed in such a manner that R₅ through R₇ combine with each other to include S⁺, there is a benzothiathiopyrylium ring.

These groups may have further a substituent. Examples of the substituent are the same as those denoted in formula (I) above.

The counter anion represented by X⁻ is the same as those denoted in X⁻ of formula (I) above.

### Compound represented by formula (III)

An iodonium salt compound (hereinafter also referred to as the iodonium salt in the invention) represented by formula

### (III) will be explained.

Examples of the aryl group represented by R₈ and R₉ include a phenyl group and a naphthyl group. These groups may have further a substituent. Examples of the substituent are the same as those denoted in formula (I) above.

The counter anion represented by X⁻ is the same as those denoted in X⁻ of formula (I) above.

### Compound represented by formula (IV)

An ammonium salt compound (hereinafter also referred to as the ammonium salt in the invention) represented by formula (I) will be explained.

Examples of the group represented by R₁₀ through R₁₃ are as follows.

Examples of the alkyl group include a straight-chained or branched alkyl group, e.g., a methyl group, an ethyl group, a butyl group, an i,-butyl group, a hexyl group, an octyl group or a stearoyl group. An alkyl group having a carbon atom number of from 1 to 10 is preferred, and a butyl group is especially preferred in view of color density. These alkyl groups may combine with each other to form a ring. The preferred cycloalkyl group is one having a carbon atom number of from 5 to 7 (for example, a cyclopentyl group or a cyclohexyl group).

Examples of the aryl group include a phenyl group and a naphthyl group, and examples of the aralkyl group include a benzyl group and a phenetyl group.

These groups may have further a substituent. Examples of the substituent include a halogen atom, a cyano group, a nitro group, an alkyl group, an aryl group, a hydroxyl group, an amino group (including an alkyl-substituted amino group), an alkoxy group, a carbamoyl group, and -COOR or -OCOR (R represents an organic group such as an alky group or an aryl group).

Next, typical examples of the onium salt in the invention will be listed, but the invention is not limited thereto.

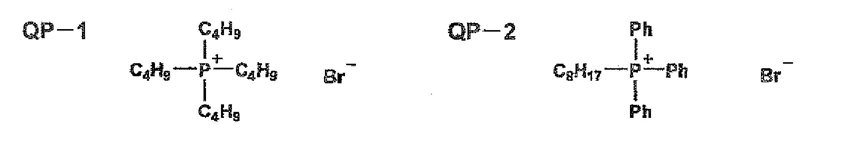

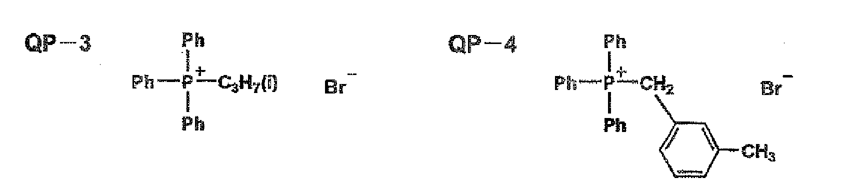

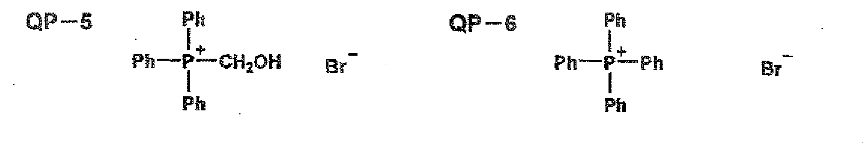

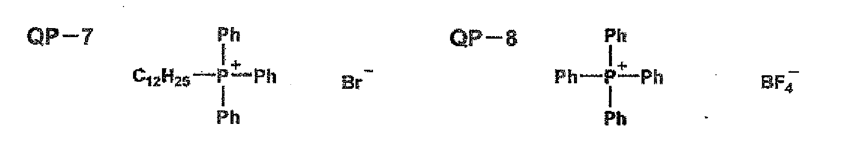

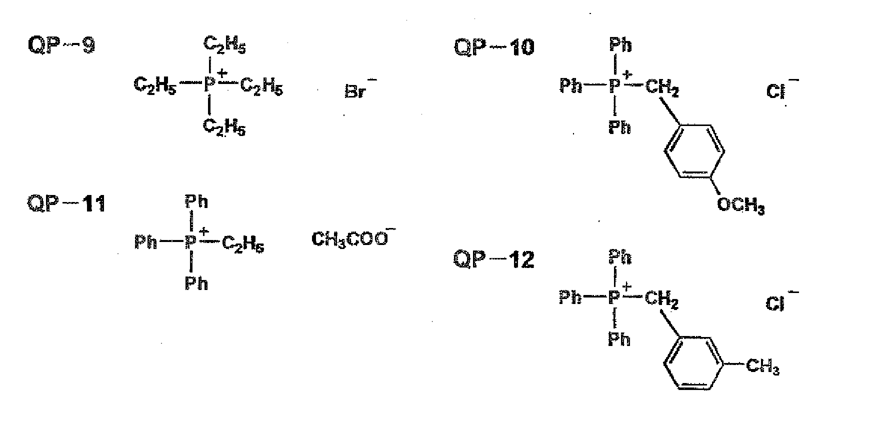

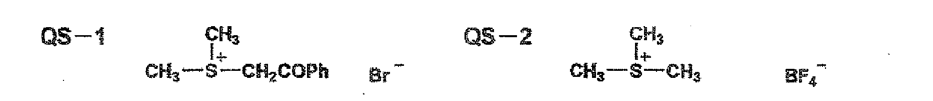

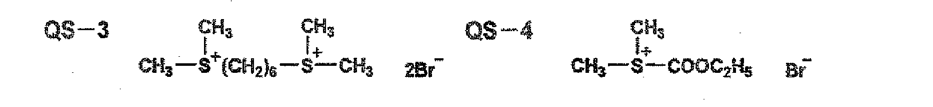

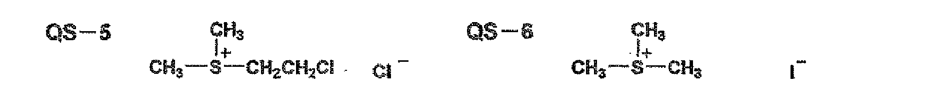

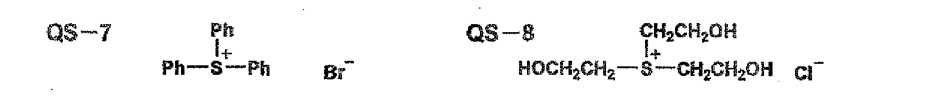

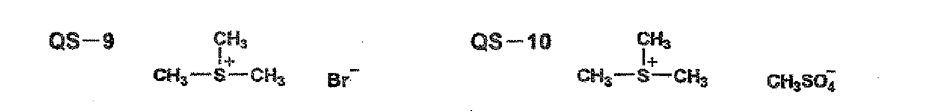

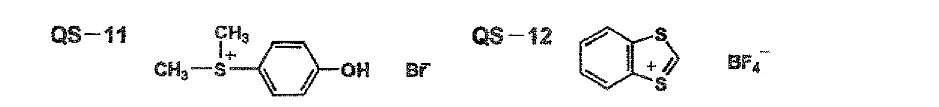

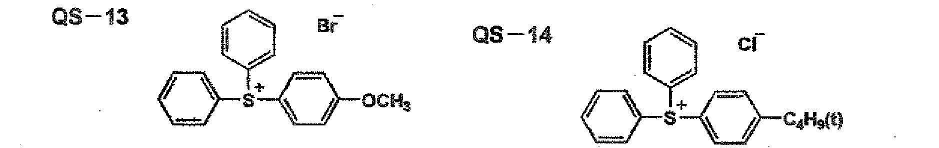

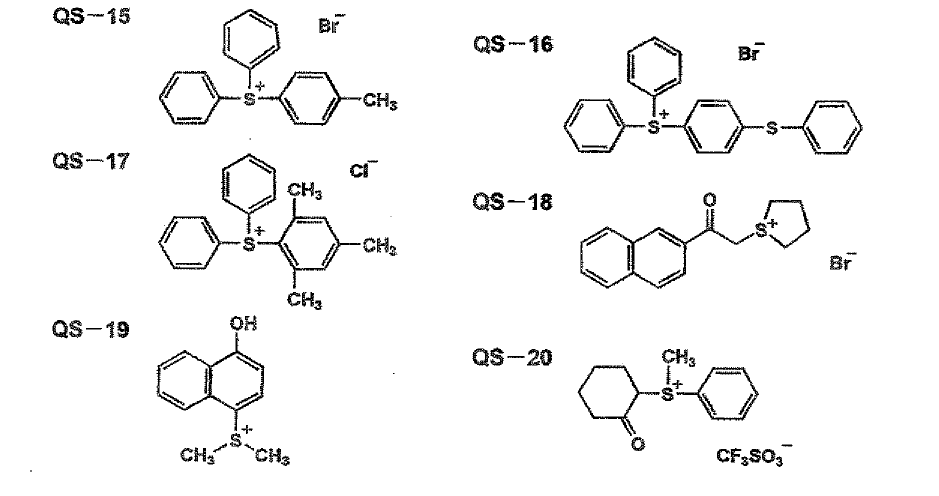

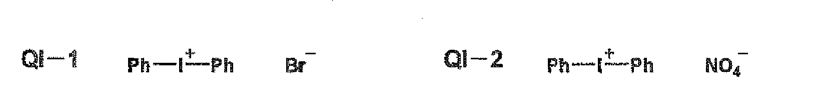

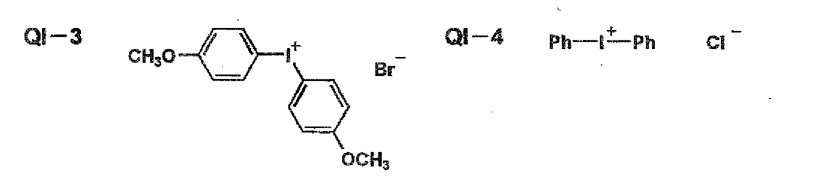

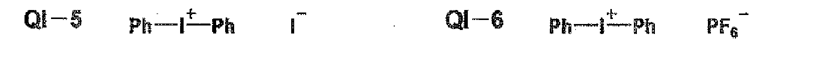

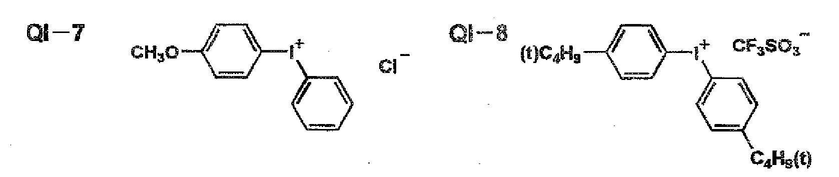

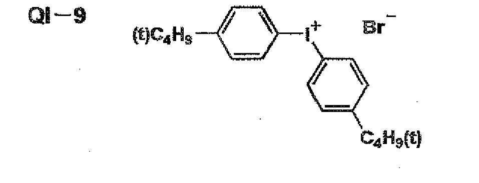

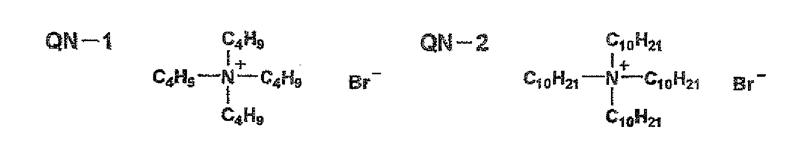

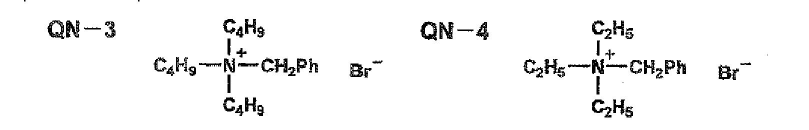

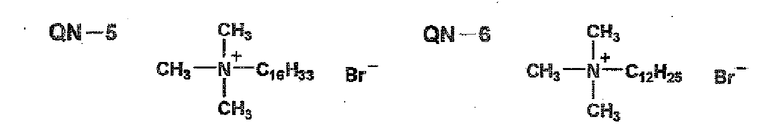

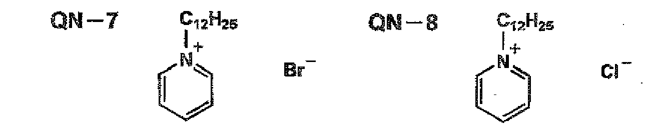

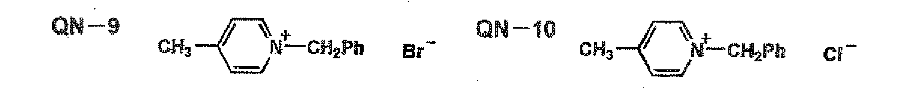

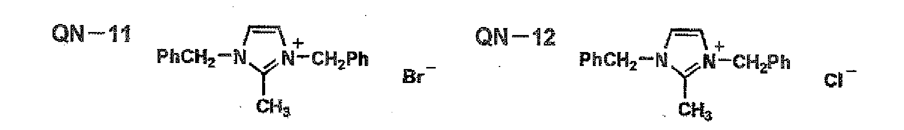

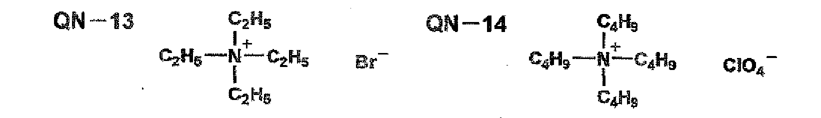

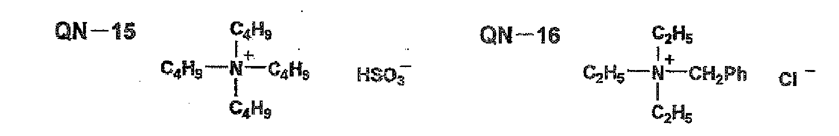

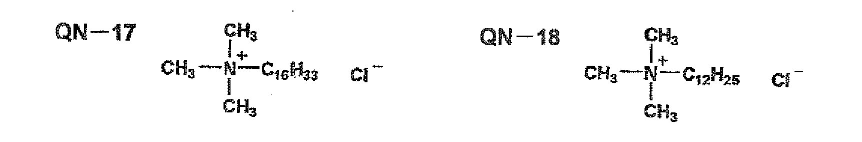

In the chemical structures above, Ph represents a phenyl group.

Other examples of the onium salt include various onium compounds disclosed in Japanese Patent Publication No. 55-39162, Japanese Patent O.P.I. Publication No. 59-14023, and Macromolecules, Vol. 10, pp. 1307 (1977).

The addition amount of the onium salt in the invention is different in kinds of onium salts used or using methods, but is preferably from 0.2 to 5 g per m² of image formation material.

As the iron-arene complexes, there are compounds having the following chemical structure.

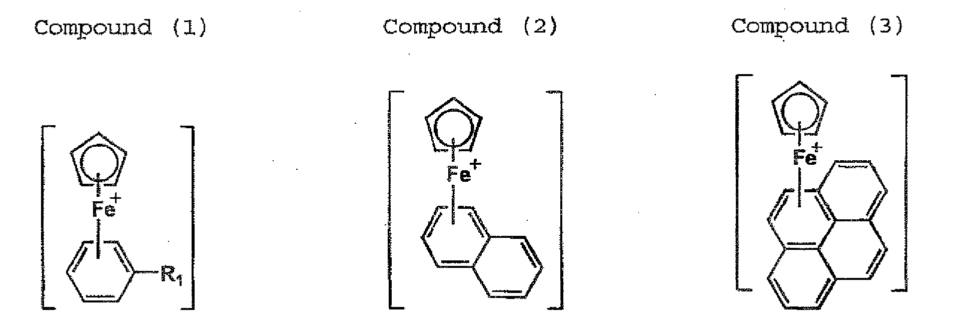

In the formulae above, R₁ represents an alkyl group, an aryl group or an alkoxy group.

The iron-arene complex is preferably compound (1)-1.

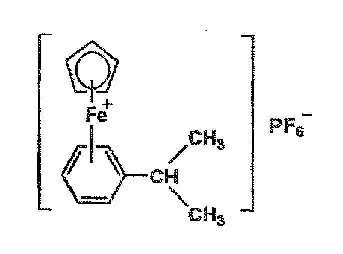

The bisimidazole compound is preferably a compound having the following chemical structure.

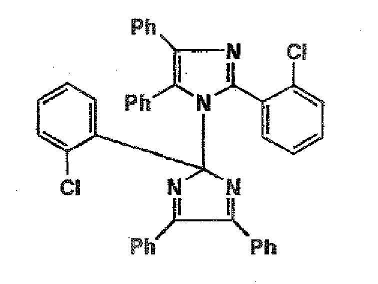

Among these polymerization initiators, onium salts are preferred.

Other polymerization initiators can be used in combination with the polymerization initiators described above in order to increase sensitivity. Examples of other polymerization initiators include an organic peroxide compound disclosed in Japanese Patent O.P.I. Publication Nos. 59-1504 and 61-243807; a diazonium compound in Japanese Patent Publication Nos. 43-23684, 44-6413, 47-1604 and US Patent No. 3,567,453; an organic azide compound disclosed in US Patent Nos. 2,848,328, 2,852,379 and 2,940,853; orthoquinondiazide compounds disclosed in Japanese Patent Publication Nos. 36-22062, 37-13109, 38-18015 and 45-9610; azo compounds disclosed in Japanese Patent Publication No. 59-142205; metal arene complexes disclosed in Japanese Patent O.P.I. Publication No. 1-54440, European Patent Nos. 109,851 and 126,712, and "Journal of Imaging Science", Volume 30, p. 174 (1986); (oxo) sulfonium organoboron complexes disclosed in Japanese Patent O.P.I. Publication Nos. 5-213861 and 5-255347; titanocenes disclosed in Japanese Patent O.P.I. Publication Nos. 59-152396 and 61-151197; transition metal complexes containing a transition metal such as ruthenium disclosed in "Coordination Chemistry Review", Volume 84, p. 85-277 (1988) and Japanese Patent O.P.I. Publication No. 2-182701; carbon tetrabromide disclosed in Japanese Patent O.P.I. Publication No. 3-209477; and organic halide compounds disclosed in Japanese Patent O.P.I. Publication No. 59-107344.

The polymerization initiator used in the invention is one having absorption maximum in the range of preferably not longer than 400 nm, more preferably not longer than 360 nm, and still more preferably not longer than 300 nm. Such a polymerization initiator having absorption in the UV range makes it possible to handle a planographic printing plate material under room light.

The polymerization initiator can be used singly or as an admixture of one or more kinds thereof. The polymerization initiator can be added to a layer optionally provided other than the image formation layer.

Other components such as a sensitizer, a thermal polymerization inhibitor, and a polymerization promoting agent can be added to the image formation layer, as long as the effect of the invention is not jeopardized.

Examples of the sensitizer include a triazine compound disclosed in Japanese Patent O.P.I. Publication No. 64-13140, an aromatic onium compound or aromatic halonium compound disclosed in Japanese Patent O.P.I. Publication No. 64-13141, an organic peroxide disclosed in Japanese Patent O.P.I. Publication No. 64-13143, a bisimidazole compound or an thiol compound disclosed in Japanese Patent Publication No. 45-37377 and US Patent No. 3,652,275. The sensitizer content of the image formation layer is preferably 0.01 to 5 parts by weight based on 100 parts by weight of photopolymerizable, oleophilic and thermoplastic monomer/prepolymer.

As the polymerization promoting agent, a polymerization initiator or a chain transfer catalyst represented by amine or a sulfur compound (for example, thiol or disulfide) can be added to the image formation layer.

The polymerization promoting agent or chain transfer catalyst can be added to the photopolymerizable composition. Examples thereof include amines such as N-phenyl glycine, triethanolamine, and N,N-diethylaniline; thiols as disclosed in US Patent No. 4,414,312 and Japanese Patent O.P.I. Publication No. 64-13144; disulfides as disclosed in Japanese Patent O.P.I. Publication No. 2-291561; thions as disclosed in US Patent No. 3,558,322 and Japanese Patent O.P.I. Publication No. 64-17048; and o-acylthiohydroxamate or N-alkoxypyridinethions as disclosed in Japanese Patent O.P.I. Publication No. 2-291560. The preferable amine is N,N-diethylaniline, and the preferable sulfur compound is 2-mercaptobenzothiazole.

The thermal polymerization inhibitor is preferably a quinone or phenol type compound, for example, hydroquinone, pyrogallol, p-methoxyphenol, catechol, β-naphtol or 2,6-di-t-butyl-p-cresol. The inhibitor content of the image formation layer is not more than 10 parts by weight, and preferably 0.01 to 5 parts by weight based on 100 parts by weight of photopolymerizable, oleophilic and thermoplastic monomer/prepolymer.

### [visualizing agent]

### (Visibility)

Before a printing plate with an image is mounted on a printing press for printing, there is usually a plate inspection process for examining if the image is correctly formed on the printing plate. When the plate inspection process is carried out, it is preferred that a printing plate before printing has a property in which an image formed on the printing plate is visible, that is, image visibility. Since the printing plate material of the invention is a processless printing plate material capable of carrying out printing without special development, it is preferred that the optical density of exposed portions or unexposed portions in the printing plate material varies by light for exposure or heat generated on exposure.

As a method for providing image visibility to a printing plate material in the invention, there is a method employing a cyanine type infrared light absorbing dye, which varies its optical density on exposure, a method employing a combination of a photo-induced acid generating agent and a compound varying its color by an acid, a method employing a combination of a color forming agent such as a leuco dye and a color developing agent or a method employing the heat melting particles or heat fusible particles which are clouded before exposure but transparent after exposure.

In the invention, there are several methods which incorporate the components described above constituting the image formation layer or other components described later. There is, for example, a method disclosed in Japanese Patent O.P.I. Publication No. 2002-287334, in which the components are dissolved in an appropriate solvent, and coated, whereby a molecule dispersion type image formation layer is formed. There is another method disclosed in Japanese Patent O.P.I. Publication Nos. 2001-277740 and 2001-277742, in which microcapsules encapsulating all or a part of the components are incorporated in the image formation layer, whereby a microcapsule type image formation layer is formed. In the microcapsule type image formation layer, the components can be incorporated in portions other than the microcapsules. It is preferred in the microcapsule type image formation layer that hydrophobic components are contained within the microcapsules and hydrophilic components are contained outside the microcapsules. The image formation layer is preferably a microcapsule type image formation layer in providing superior on-press developability.

### [Other additives]

Besides the components described above, the image formation layer can contain other additives such as a surfactant, a colorant, a print-out agent, a higher fatty acid derivative, a plasticizer, inorganic particles, and low molecular weight hydrophilic compound. These additives can be added in the from of molecular dispersion, and can be encapsulated together with the polymerizable compound described above in microcapsules.

### (Surfactant)

In the invention, the image formation layer preferably contains a surfactant in order to promote on-press developability at initial printing and to improve coated surface properties. As the surfactant, there are a nonionic surfactant, an anionic surfactant, a cationic surfactant, an amphoteric surfactant and a fluorine-containing surfactant. These surfactants may be used singly or as an admixture of two or more kinds thereof.

The nonionic surfactant is not limited, and a conventional known nonionic surfactant can be used. Examples thereof include polyoxyethylenealkyl ethers, polyoxyethylenealkylphenyl ethers, polyoxyethylene-polystyrylphenyl ethers, polyoxyethylenepolyoxypropylenalkyl ethers, partial esters of glycerin and fatty acids, partial esters of sorbitan and fatty acids, partial esters of pentaerythritol and fatty acids, propylene glycol monofatty acid ester, partial esters of sucrose and fatty acids, partial esters of polyoxyethylenesorbitan and fatty acids, partial esters of polyoxyethylenesorbitol and fatty acids, esters of polyoxyethylene glycol and fatty acids, partial esters of polyglycerin and fatty acids, polyoxyethylene castor oil, partial esters of polyoxyethyleneglycerin and fatty acids, fatty acid diethanolamides, N,N-bis-2-hydroxyalkylamines, polyoxyethylenealkylamines, triethanolamine fatty acid esters, trialkylamine oxides, polyethylene glycol and a copolymer of polyethylene glycol and polypropylene glycol.

The anionic surfactant is not limited, and a conventional known anionic surfactant can be used. Examples of the anionic surfactant include fatty acid salts, abietic acid salts, hydroxyalkane sulfonic acid salts, alkane sulfonic acid salts, dialkylsulfosuccinic acid salts, straight-chained alkylbenzene sulfonic acid salts, branched alkylbenzene sulfonic acid salts, alkylnaphthalene sulfonic acid salts, alkyldiphenylether sulfonic acid salts, alkylphenoxypolyoxyethylenepropyl sulfonic acid salts, polyoxyethylenealkyl sulfophenylether salts, N-methyl-N-oleiltaurine sodium salts, N-alkylsulfosuccinic acid monoamide disodium salts, petroleum sulfonic acid salts, nitrated castor oil, sulfated beef tallow, fatty acid alkyl ester sulfate salts, alkylsulfate salts, polyoxyethylenealkylethersulfate salts, fatty acid monoglyceride sulfate salts, polyoxyethylenealkyl-phenylethersulfate salts, polyoxyethylenestyryl-phenylethersulfate salts, alkylphosphate salts, polyoxyethylenealkyletherphosphate salts, polyoxyethylenealkylphenyletherphosphate salts, partial saponification products of styrene-maleic anhydride copolymers, partial saponification products of olefin-maleic anhydride copolymers, and condensates of naphthalene sulfonic acid salts with formalin.

The cationic surfactant is not limited, and a conventional known cationic surfactant can be used. Examples thereof include alkylamine salts, quaternary ammonium salts such as tetrabutylammonium bromide, polyoxyethylene alkylamine salts, and polyethylene polyamine derivatives.

The amphoteric surfactant is not limited, and a conventional known amphoteric surfactant can be used. Examples thereof include carboxybetains, aminn carboxylic acids, sulfobetaines, aminosulfates and imidazolines.

Surfactants, in which the polyoxyethylene in the surfactants described above is replaced by polyoxymethylene polyoxypropylene or polyoxybutylene, can be also used.

A preferred surfactant is a fluorine-containing surfactant having a perfluoroalkyl group in the molecule. Examples thereof include anionic ones such as perfluoroalkyl carboxylic acid salts, perfluoroalkyl sulfonic acid salts, and perfluoroalkyl phosphates; amphoteric ones such as perfluoroalkyl betaines; cationic ones such as perfluoroalkyltrimethylammonium salts; and nonionic ones such as perfluoroalkylamineoxide, perfluoroalkylethylene oxide adduct, an oligomer having a perfluoroalkyl group and a hydrophilic group, an oligomer having a perfluoroalkyl group and an oleophilic group, an oligomer having a perfluoroalkyl group, a hydrophilic group and an oleophilic group, and urethanes having a perfluoroalkyl group or an oleophilic group. The fluorine-containing surfactants disclosed in Japanese Patent O.P.I. Publication Nos. 62-17950, 62-226143 and 60-168144 can be also used.

These surfactants may be used singly or as an admixture of two or more kinds thereof.

The surfactant content of the image formation layer is preferably from 0.001 to 10% by weight, and more preferably from 0.01 to 5% by weight.

### (Colorant)

The image formation layer in the invention can contain as a colorant a dye having a strong absorption in the visible wavelength range. Examples of the dye include Oil Yellow #101, Oil Yellow #103, Oil Pink #312, Oil green BG, Oil Blue BOS, Oil Blue #603, Oil Black BY, Oil Black BS, Oil Black T-505 (all of these are manufactured by Orient Chemical Industries, Ltd.), Victoria Pure Blue, Crystal Violet (CI42555), Methyl Violet (CI42535), Ethyl Violet, Rhodamine B (CI145170B), Malachite Green (CI42000), Methylene Blue (CI52015) and dyes described in Japanese Patent O.P.I. Publication No. 62-293247. Pigments such as phthalocyanine pigment, azo pigment, carbon black and titanium oxide can be suitably used also.

These dyes are preferably added to the image formation layer, since image portions can be easily discriminated from non-image portions. The additional amount of the dye in the image formation layer is preferably from 0.01 to 10 % by weight.

### [Protective layer]

In the invention, a protective layer is preferably provided on the image formation layer in order to prevent flaws from occurring during handling. The protective layer may be provided directly or through an intermediate layer on the image formation layer. It is preferred that the protective layer can be removed on a printing press.

In the invention, it is preferred that the protective layer contains a water soluble resin or a water swellable resin in which a water soluble resin is partly cross-linked. Examples of the water-soluble resin include polysaccharides, polyethylene oxide, polypropylene oxide, polyvinyl alcohol, polyethylene glycol (PEG), polyvinyl ether, a styrenebutadiene copolymer, a conjugation diene polymer latex of methyl methacrylate-butadiene copolymer, an acryl polymer latex, a vinyl polymer latex, polyacrylamide, and polyvinyl pyrrolidone. In the invention, polysaccharides are preferably used as the water-soluble resin. As the polysaccharide, starches, celluloses, polyuronic acid and pullulan can be used. Among them, a cellulose derivative such as a methyl cellulose salt, a carboxymethyl cellulose salt or a hydroxyethyl cellulose salt is preferable, and a sodium or ammonium salt of carboxymethyl cellulose is more preferable. These polysaccharides can form a preferred surface shape of the hydrophilic layer.

In the invention, the protective layer can contain a light-to-heat conversion material described above.

The protective layer in the invention preferably contains a matting agent with an average size of from 1 to 20 µm, in order to prevent flaws from occurring while the printing plate material is mounted on a laser apparatus or on a printing press.

The matting agent is preferably inorganic particles having a new Mohs hardness of not less than 5 or an organic matting agent. Examples of the inorganic particles having a new Mohs hardness of not less than 5 include particles of metal oxides (for example, silica, alumina, titania, zirconia, iron oxides, chromium oxide), particles of metal carbides (for example, silicon carbide), boron nitride particles, and diamond particles. Examples of the organic matting agent include starch described in US Patent No. 2,322,037, starch derivatives described in BE 625,451 and GB 981,198, Polyvinyl alcohol described in JP-B-44-3643, polystyrene or polymethacrylate described in CH 330,158, polyacrylonitrile described in US Patent No. 3,079,257, and polycarbonate described in US Patent No. 3,022,169. The adding amount of the matting agent in the protective layer is preferably from 0.1 g to less than 10 g per m².

A coating solution for the protective layer may contain a nonionic surfactant in order to secure uniform coatability of the protective layer. Examples of the nonionic surfactant include sorbitan tristearate, sorbitan monopalmitate, sorbitan trioleate, stearic acid monoglyceride, polyoxyethylenenonylphenyl ether, and polyoxyethylenedodecyl ether. The content of the nonionic surfactant is preferably 0.05 to 5% by weight, and more preferably 1 to 3% by weight based on the total solid content of the protective layer.

In the invention, the dry thickness of the protective layer is preferably 0.05 to 1.5 g/m², and more preferably 0.1 to 0.7 g/m². This content range prevents occurrence of staining or scratches or deposition of fingerprints, and minimizes ablation scum without impairing removability of the protective layer.

### [Aluminum Support]

Next, an aluminum support used in the invention will be explained. As the aluminum support used in the invention, an aluminum support comprised of aluminum or aluminum alloy (hereinafter simply referred to as aluminum) is used in view of gravity or rigidity. As the aluminum alloy, there can be used various ones including an alloy of aluminum and a metal such as silicon, copper, manganese, magnesium, chromium, zinc, lead, bismuth, nickel, titanium, sodium or iron. An aluminum plate can be used which is manufactured according to various calender procedures. The thickness of the aluminum support is not specifically limited, as long as it can be mounted on a printing press, but the aluminum support with a thickness of from 50 to 500 µm is generally easy to handle.

The aluminum support in the invention is preferably one having a hydrophilic surface, and more preferably one (i.e. grained aluminum support) subjected to any of known surface roughening treatment, anodizing treatment and hydrophilization processing. The grained aluminum support can be manufactured according to any conventional method. As one of the preferred manufacturing method, there is a method disclosed in Japanese Patent O.P.I. Publication No. 10-869.

### (Degreasing treatment)

It is preferable that the aluminum support in the invention is subjected to degreasing treatment for removing rolling oil prior to surface roughening (graining). The degreasing treatments include degreasing treatment employing solvents such as trichlene and thinner, and an emulsion degreasing treatment employing an emulsion such as kerosene or triethanol. It is also possible to use an aqueous alkali solution such as caustic soda for the degreasing treatment. When an aqueous alkali solution such as caustic soda is used for the degreasing treatment, it is possible to remove soils and an oxidized film which can not be removed by the above-mentioned degreasing treatment alone. When an aqueous alkali solution such as caustic soda is used for the degreasing treatment, the resulting support is preferably subjected to desmut treatment in an aqueous solution of an acid such as phosphoric acid, nitric acid, sulfuric acid, chromic acid, or a mixture thereof, since smut is produced on the surface of the support.

### (Surface roughening method)

As the surface roughening methods, there are a mechanical method and an electrolytically etching method.

Though there is no restriction for the mechanical surface roughening method, a brushing roughening method and a honing roughening method are preferable. The brushing roughening method is carried out by rubbing the surface of the aluminum support with a rotating brush with a brush hair with a diameter of 0.2 to 0.8 mm, while supplying slurry in which volcanic ash particles with a particle size of 10 to 100 µm are dispersed in water to the surface of the support. The honing roughening method is carried out by ejecting obliquely slurry with pressure applied from nozzles to the surface of the aluminum support, the slurry containing volcanic ash particles with a particle size of 10 to 100 µm dispersed in water. The surface roughening can be also carried out by laminating the aluminum support surface with a sheet whose surface was coated with abrasive particles with a particle size of from 10 to 100 µm at intervals of 100 to 200 µm and at a density of 2.5 x 10³ to 10 x 10³/cm², and applying pressure to the sheet to transfer the roughened pattern of the sheet to the support and roughen the surface of the aluminum support.

### <Mechanical surface roughening method>

After the support has been roughened mechanically, it is preferably dipped in an acid or an aqueous alkali solution in order to remove abrasives and aluminum dust, etc. which have been embedded in the surface of the aluminum support. Examples of the acid include sulfuric acid, persulfuric acid, hydrofluoric acid, phosphoric acid, nitric acid and hydrochloric acid, and examples of the alkali include sodium hydroxide and potassium hydroxide. Among those mentioned above, an aqueous alkali solution of for example, sodium hydroxide is preferably used. The dissolution amount of aluminum in the support surface is preferably 0.5 to 5 g/m². After the support has been dipped in the aqueous alkali solution, it is preferable for the support to be dipped in an acid such as phosphoric acid, nitric acid, sulfuric acid and chromic acid, or in a mixed acid thereof, for neutralization.

### <Electrolytic surface roughening method>

Though there is no restriction for the electrolytic surface roughening method, a method, in which the support is electrolytically surface roughened in an acidic electrolytic solution employing alternating current, is preferred. Though an acidic electrolytic solution generally used for the electrolytic surface roughening can be used, it is preferable to use an electrolytic solution of hydrochloric acid or that of nitric acid. The electrolytic surface roughening method disclosed in Japanese Patent Publication No. 48-28123, British Patent No. 896,563 and Japanese Patent O.P.I. Publication No. 53-67507 can be used. In the electrolytic surface roughening method, voltage applied is generally from 1 to 50 V, and preferably from 10 to 30 V. The current density used can be selected from the range from 10 to 200 A/dm², and is preferably from 50 to 150 A/dm². The quantity of electricity can be selected from the range of from 100 to 5000 C/dm², and is preferably 100 to 2000 C/dm². The temperature during the electrolytically surface roughening may be in the range of from 10 to 50 °C, and is preferably from 15 to 45 °C.

When the support is electrolytically surface roughened by using an electrolytic solution of nitric acid, voltage applied is generally from 1 to 50 V, and preferably from 5 to 30 V. The current density used can be selected from the range from 10 to 200 A/dm², and is preferably from 20 to 100 A/dm². The quantity of electricity can be selected from the range of from 100 to 5000 C/dm², and is preferably 100 to 2000 C/dm². The temperature during the electrolytically surface roughening may be in the range of from 10 to 50 °C, and is preferably from 15 to 45 °C. The nitric acid concentration in the electrolytic solution is preferably from 0.1% by weight to 5% by weight. It is possible to optionally add, to the electrolytic solution, nitrates, chlorides, amines, aldehydes, phosphoric acid, chromic acid, boric acid, acetic acid or oxalic acid.

When the support is electrolytically surface roughened by using an electrolytic solution of hydrochloric acid, voltage applied is generally from 1 to 50 V, and preferably from 2 to 30 V. The current density used can be selected from the range from 10 to 200 A/dm², and is preferably from 50 to 150 A/dm². The quantity of electricity can be selected from the range of from 100 to 5000 C/dm², preferably 100 to 2000 C/dm², and more preferably from 200 to 1000 C/dm². The temperature during the electrolytically surface roughening may be in the range of from 10 to 50 °C, and is preferably from 15 to 45 °C. The hydrochloric acid concentration in the electrolytic solution is preferably from 0.1% by weight to 5% by weight.

After the support has been electrolytically surface roughened, it is preferably dipped in an acid or an aqueous alkali solution in order to remove aluminum dust, etc (desmut treatment). produced in the surface of the support. Examples of the acid include sulfuric acid, persulfuric acid, hydrofluoric acid, phosphoric acid, nitric acid and hydrochloric acid, and examples of the alkali include sodium hydroxide and potassium hydroxide. Among those mentioned above, the aqueous alkali solution is preferably used. The dissolution amount of aluminum in the support surface is preferably 0.5 to 5 g/m². After the support has been dipped in the aqueous alkali solution, it is preferable for the support to be dipped in an acid such as phosphoric acid, nitric acid, sulfuric acid and chromic acid, or in a mixed acid thereof, for neutralization.

The mechanical surface roughening and electrolytic surface roughening may be carried out singly, and the mechanical surface roughening followed by the electrolytic surface roughening may be carried out.

### (Anodizing treatment)

After the surface roughening, anodizing treatment may be carried out. There is no restriction in particular for the method of anodizing treatment used in the invention, and known methods can be used. The anodizing treatment forms an anodization film on the surface of the aluminum support. For the anodizing treatment there is preferably used a method of applying a current density of from 1 to 10 A/dm² to an aqueous solution containing sulfuric acid and/or phosphoric acid in a concentration of from 10 to 50%, as an electrolytic solution. However, it is also possible to use a method of applying a high current density to sulfuric acid as described in U.S. Patent No. 1,412,768, a method to electrolytically etching the support in phosphoric acid as described in U.S. Patent No. 3,511,661, or a method of employing a solution containing two or more kinds of chromic acid, oxalic acid, malonic acid, etc. The coated amount of the formed anodization film is suitably 1 to 50 mg/dm², and preferably 10 to 40 mg/dm². The coated amount of the formed anodization film can be obtained from the weight difference between the aluminum plates before and after dissolution of the anodization film. The anodization film of the aluminum plate is dissolved employing for example, an aqueous phosphoric acid chromic acid solution which is prepared by dissolving 35 ml of 85% by weight phosphoric acid and 20 g of chromium (IV) oxide in 1 liter of water.

The aluminum support, which has been subjected to anodizing treatment, is optionally subjected to sealing treatment. For the sealing treatment, it is possible to use known methods using hot water, boiling water, steam, a sodium silicate solution, an aqueous dichromate solution, a nitrite solution and an ammonium acetate solution.

### (Hydrophilization processing)

As the hydrophilization processing method after the above treatments, there is a method of undercoating, on the support, a water soluble resin such as polyvinyl phosphonic acid, a polymer or copolymer having a sulfonic acid in the side chain or polyacrylic acid; a water soluble metal salt such as zinc borate; a yellow dye; an amine salt; and so on. The sol-gel treatment support disclosed in Japanese Patent O.P.I. Publication No. 5-304358, which has a functional group capable of causing addition reaction by radicals as a covalent bond, is suitably used.

### [Printing ink containing polymerizable monomer, polymerizable oligomer]

### (Polymerizable monomer, polymerizable oligomer)

In the invention, the printing ink preferably contains at least one selected from a polymerizable monomer and a polymerizable oligomer.

Herein, the polymerizable monomer has an ethylenically unsaturated bond, and a weight average molecular weight of less than 3,000, and the polymerizable oligomer has an ethylenically unsaturated bond, and a weight average molecular weight of not less than 3,000. Examples thereof include (meth)acxylic acid, maleic acid, and their oligomer; and urethane resin, epoxy resin, polyester resin, polyol resin, and vegetable oil modified with a compound having an ethylenically unsaturated bond such as (meth)acrylic acid, Among them, a compound having an ethylenically unsaturated bond, which are miscible with a rosin-modified phenol resin, for example, vegetable oil modified with an ethylenically unsaturated, is preferred. These compounds may be used alone or as an admixture of two or more kinds thereof. The content of the polymerizable monomer and/or oligomer in the printing ink in the invention is preferably from 10 to 40% by weight.

When printing is carried out employing a planographic printing plate described later, incorporation of the polymerizable monomer and/or the polymerizable oligomer to printing ink reduces paper wastes or image faults at initial printing stage, and further makes it possible to remove easily stains at non-image portions of the printing plate caused by scratches or pressure. This mechanism is not clear, but is probably because the polymerizable monomer and/or the polymerizable oligomer swells a layer at portions unnecessary for printing in an exposed planographic printing plate material, and makes it possible to remove easily the swelled portions due to ink tackiness.

### (Vegetable Oil)

In the invention, printing ink preferably contains vegetable oil. Example of the vegetable oil include soybean oil, cotton seed oil, linseed oil, safflower oil, tung oil, tall oil, castor oil, oiticica oil, candlenut oil, akarritom seed fat, parinarium seed fat, dehydrated castor oil, and canola oil. These vegetable oils may be alone or as an admixture of two or more kinds thereof. In the invention, the content of the vegetable oil in the printing ink is preferably from 10 to 40% by weight.

When printing is carried out employing a planographic printing plate described later, incorporation of vegetable oil to printing ink reduces paper wastes at initial printing stage or image faults, and minimizes stains at non-image portions of the printing plate produced by scratches or pressure. This is probably because the vegetable oil enhances a swell property of a layer at portions unnecessary for printing in an exposed planographic printing plate material.

### (Other components of printing ink)

The printing ink in the invention can contain pigment for coloring. As the pigment used in the invention, there are known inorganic or organic pigments. Examples of the inorganic pigment include titanium oxide, calcium carbonate, barium sulfate, alumina white, zinc oxide, prussian blue, red iron oxide, carbon black, aluminum powder, and brass powder. Examples of the organic pigment include soluble azo pigments of the β-naphthol, β-oxynaphthoic acid, β-oxynaphthoic acid arylide, acetoacetic acid arylide, and pyrazolone type; insoluble azo pigments of the β-naphthol, β-oxynaphthoic acid arylide, acetoacetic acid arylide monoazo, acetoacetic acid arylide bisoazo, and pyrazolone type; phthalocyanine pigments such as copper phthalocyanine blue, chlorinated or brominated copper phthalocyanine blue, sulfonated copper phthalocyanine blue, and metal free phthalocyanine; and polycyclic or heterocyclic pigments of the quinacridone, dioxazine, pyranthrone, anthanthrone, indanthrone, anthrapyrimidine, fravanthrone, thioindigo, anthraquinone, perynone, perylene, isoindolinone, metal complexes, and quinophtharone type.

As a binder used in printing ink in the invention, resin used in conventional ink for offset printing can be used without any limitations. Examples of such resin include rosin modified phenol resin, rosin modified maleic acid resin, and various alkyd resins, petroleum resin, rosin ester resin, polyester resin, gilsonite and their modified resins. The rosin modified phenol resin can be used alone or in combination with synthetic resins such as various alkyd resins, petroleum resin, rosin ester resin, polyester resin, gilsonite and their modified resins. Various alkyd resins, petroleum resin, etc. can be also used in combination with the rosin modified phenol resin. These binders can be used alone or as a mixture of two or more kinds thereof.

The resins above cross-linked or gelled employing a cross-linking agent or a gelling agent also can be used as a binder for printing ink. Examples of the cross-linking agent include isocyanate compounds such as tolylene diisocyanate, diphenylmethane diisocyanate, isophorone diisocyanate, hexamethylene diisocyanate, tetramethylxylylene diisocyanate, and polymethylenepolyphenyl polyisocyanate. Examples of the gelling agent include aziridine compounds such as trimethylolpropane-tris-β-N-aziridinylpropionnate, and pentaerithritolpropane-tris-β-N-aziridinylpropionnate; epoxy compounds such as glycerol polyglycidyl ether, and trimethylolpropane polyglycidyl ether; and aluminum chelate compounds such as ethylacetate aluminum diisopropoxide. These cross-linking agents or gelling agents can be used alone or as a mixture of two or more kinds thereof, respectively.

The binder is preferably a cross-linked resin which is obtained by heating a mixture of a resin with a hydroxyl group and a polyfunctional isocyanate compound as a cross-linking agent or a mixture of a resin with a hydroxyl group, a polyfunctional isocyanate compound as a cross-linking agent and a catalyst. That is, the cross-linked resin is preferably used which is obtained by heating and reacting a resin with a hydroxyl group, a polyfunctional isocyanate compound as a cross-linking agent, and optionally a catalyst. The resin with a hydroxyl group and the polyfunctional isocyanate is appropriately selected from those described above. As the catalyst can be used conventional ones such as organic titanate compounds, organic tin compounds, and organic amines. Typical examples thereof include tetrabutyl titanate, stannous octilate, dibutyltin acetate, triethylamine, dimethylaniline, and triethylenediamine. These catalysts can be used alone or as an admixture of two or more kinds thereof. The heating condition is not specifically limited as long as it is such condition under which the resin with a hydroxyl group is cross-linked through the cross-linking agent.

The printing ink of the invention can contain a photopolymerization initiator. As the photopolymerization initiator, conventional ones can be used, but one which can absorb ultraviolet light to generate an active radical is preferred. Examples thereof include acetophenone, 2,2-diethoxyacetophenone, p-dimethylaminoacetophenone, benzophenone, 2-chlorobenzophenone, p,p'-dichloro-benzophenone, p,p'-bisdiethylaminobenzophenone, Michler's ketone, benzil, dibenzoyl, benzoin methyl ether, benzoin ethyl ether, benzoin propyl ether, benzoin n-propyl ether, benzoin isobutyl ether, benzoin n-butyl ether, benzoin dimethyl ketal, tetramethylthiuram monosulfide, thioxanthone, 2-chlorothioxanthone, 2-methylthioxanthone, azobisisobutyronitrile, benzoin peroxide, and di-tert-butyl peroxide. These catalysts may be optionally used as an admixture of two or more kinds thereof.

The printing ink of the invention can contain an oxidation polymerization catalyst. As the oxidation polymerization catalyst, conventional ones can be used. Typical examples thereof include a metal salt of an organic carboxylic acid, for example, a salt of an organic carboxylic acid such as acetic acid, propionic acid, butyric acid, isopentanoic acid, hexanoic acid, 2-ethylbutyric acid, naththenic acid, octylic acid, nonanoic acid, decanoic acid, 2-ethylhexanoic acid, isooctanoic acid, isononanoic acid, lauric acid, palmitic acid, stearic acid, oleic acid, linoleic acid, neodecanoic acid, versatic acid, secanoic acid, linseed oil fatty acid, tall oil fatty acid, dimethylhexanoic acid, 3,5,5-trimethylhexanoic acid, or dimethyloctanoic acid with cobalt, manganese, lead, iron, zinc, calcium, or zirconium; a phenanthroline compound such as 1,10-phenanthroline or 5-methylphenanthrolone; and 2,2'-dipyridine, but the invention is not limited thereto. These compounds can be optionally used as an admixture of two or more kinds thereof.

The printing ink in the invention for offset printing optionally contains an additive such as a polymerization inhibitor, a pigment dispersant, a drying retarder, a solvent, an anti-oxidant, a cleaning auxiliary, an anti-abrasion agent, an anti-offset agent or a nonionic surfactant.

### (Dampening solution)

It is preferred that dampening solution contains an alkylene glycol monoalkyl ether compound. The alkylene glycol monoalkyl ether is a monoether of alkylene glycol with alkyl. It is preferred that the alkylene glycol monoalkyl ether is dissolved in dampening solution and used.

The alkylene glycol monoalkyl ether compound is preferably a compound represented by formula (A).

Formula (A) R₁₁-O-(CH₂C(R₁₂)HO)ₙ-H

In formula above, R₁₁ represents an alkyl group having a carbon atom number of from 1 to 6, R₁₂ represents a methyl group or a hydrogen atom, and n represents an integer of from 1 to 4.

Examples of the compound represented by formula (A) include ethylene glycol monomethyl ether, diethylene glycol monomethyl ether, triethylene glycol monomethyl ether, tetraethylene glycol monomethyl ether, ethylene glycol monoethyl ether, diethylene glycol monoethyl ether, triethylene glycol monoethyl ether, tetraethylene glycol monoethyl ether, ethylene glycol monopropyl ether, diethylene glycol monopropyl ether, triethylene glycol monopropyl ether, tetraethylene glycol monopropyl ether, ethylene glycol monoisopropyl ether, diethylene glycol monoisopropyl ether, triethylene glycol monoisopropyl ether, tetraethylene glycol monoisopropyl ether, ethylene glycol monobutyl ether, diethylene glycol monobutyl ether, triethylene glycol monobutyl ether, tetraethylene glycol monobutyl ether, ethylene glycol monoisobutyl ether, diethylene glycol monoisobutyl ether, triethylene glycol monoisobutyl ether, tetraethylene glycol monoisobutyl ether, ethylene glycol monotert-butyl ether, diethylene glycol monotert-butyl ether, triethylene glycol monotert-butyl ether, tetraethylene glycol monotert-butyl ether, propylene glycol monomethyl ether, dipropylene glycol monomethyl ether, tripropylene glycol monomethyl ether, propylene glycol monoethyl ether, dipropylene glycol monoethyl ether, tripropylene glycol monoethyl ether, tetrapropylene glycol monoethyl ether, propylene glycol monopropyl ether, dipropylene glycol monopropyl ether, tripropylene glycol monopropyl ether, propylene glycol monoisopropyl ether, dipropylene glycol monoisopropyl ether, tripropylene glycol monoisopropyl ether, dipropylene glycol monobutyl ether, tripropylene glycol monobutyl ether, propylene glycol monoisobutyl ether, dipropylene glycol monoisobutyl ether, tripropylene glycol monoisobutyl ether, propylene glycol monotert-butyl ether, dipropylene glycol monotert-butyl ether, and tripropylene glycol monotert-butyl ether.

The compound represented by formula (A) may be used singly or as an admixture of two or more kinds thereof.

The content of the compound represented by formula (A) in the dampening solution in the invention is suitably from 0.05 to 5% by weight, preferably from 0.2 to 3% by weight, and more preferably from 0.3 to 2% by weight, in view of printing durability.

The dampening solution in the invention preferably contains, in addition to the alkylene glycol monoalkyl ether compound above, a pH adjusting agent, a wetting property improving aid, a water-soluble polymer, a chelating agent or an antiseptic.

As the pH adjusting agent, at least one selected from water-soluble organic or inorganic acids and their salts can be used. These compounds are effective in adjusting pH of a dampening solution, giving a buffering effect to a dampening solution, appropriately etching a support of a printing plate, and preventing corrosion of the support. Preferred organic acids include citric acid, ascorbic acid, malic acid, tartaric acid, lactic acid, acetic acid, gluconic acid, hydroxyacetic acid, oxalic acid, malonic acid, levulinic acid, sulfanilic acid, p-toluenesulfonic acid, phosphoric acid, phosphonic acid and phytic acid.

Examples of the inorganic acids include nitric acid and sulfuric acid. Alkali metal, alkaline earth metal, ammonium or organic amine salts of the organic or inorganic acids can be suitably used. These organic or inorganic acids or their salts may be used singly or as an admixture of two or more kinds thereof.

The content of the pH adjusting agent in the dampening solution is suitably from 0.001 to 0.1% by weight. The pH adjusting agent content not less than 0.001% by weight minimizes contamination during printing due to etching to an aluminum support. The pH adjusting agent content not more than 0.1% by weight is preferred in preventing rust of a printing press.

The pH of the dampening solution is preferably from 4.5 to 7.5. The above pH range minimizes contamination during printing.

Surfactants or other solvents can be used as the wetting property improving aid. As the surfactants used, an anionic surfactant and/or a nonionic surfactant are preferred.

Examples of the anionic surfactant include fatty acid salts, abietic acid salts, hydroxyalkanesulfonic acid salts, alkanesulfonic acid salts, dialkylsulfosuccinic acid salts, straight chain alkylbebzenesulfonic acid salts, branched alktlbebzenesulfonic acid salts, alkylnaphthalenesulfonic acid salts, alkylphenoxypolyoxyethylene propylsulfonic acid salts, polyoxyethylene alkylsulfophenyl ether, N-methyl-N-oleyltaurine sodium salts, N-alkylsulfosuccinic acid monoamide disodium salts, petroleum sulfonic acid salts, sulfated castor oil, sulfated tallow oil, fatty acid alkyl ester sulfuric acid ester salts, alkyl sulfate salts, polyoxyethylene alkyl ether sulfuric acid ester salts, fatty acid monoglyceride sulfate ester salts, polyoxyethylene alkylphenyl ether sulfuric acid salts, polyoxyethylene styrylphenyl ether sulfuric acid salts, alkylphosphate ester salts, polyoxyethylene alkyl ether phosphoric acid ester salts, polyoxyethylene alkylphenyl ether phosphoric acid ester salts, partially saponified styrene anhydrous maleic acid copolymer, partially saponified olefin-anhydrous maleic acid copolymer, and naphthalenesulfonic acid salt-formaline condensates. Of the foregoing, dialkylsulfosuccinic acid salts, alkyl sulfate salts and alkylnaphthalenesulfonic acid salts are preferred.

Examples of the nonionic surfactant include polyoxyethylene alkylphenyl ethers, polyoxyethylene polystyrylphenyl ethers, polyoxyethylene polyoxypropylene alkyl ethers, glycerin fatty acid partial esters, sorbitan fatty acid partial esters, pentaerythritol fatty acid partial esters, propylene glycol monofatty acid esters, sugar fatty acid partial esters, polyoxyethylene sorbitan fatty acid partial esters, polyoxyethylene sorbitol fatty acid partial esters, polyethylene glycol fatty acid esters, polyglycerin fatty acid partial esters, polyoxyethylene-modified caster oils, polyoxyethylene glycerin fatty acid partial esters, fatty acid diethanolamides, N,N-bis-2-hydroxyalkylamines, polyoxyethylene alkylamine, triethanolamine fatty acid esters, polyoxyethylene-polyoxypropylene block polymers, and trialkylamineoxides.

Besides the above, fluorine-contained surfactants or silicon-contained surfactants can be also used. The surfactant content of the dampening solution preferably not more than 1% by weight, and more preferably from 0.001 to 0.5% by weight in view of foaming. The surfactants may be used as an admixture of two or more kinds thereof.

Other examples of the wetting property improving aid include propylene glycol, dipropylene glycol, tripropylene glycol, tetrapropylene glycol, pentapropylene glycol, ethylene glycol, diethylene glycol, triethylene glycol, butylene glycol, hexylene glycol, 2-ethyl-1,3-hexanediol, 3-methoxy-3-methyl-1-butanol, 1-butoxy-2-propanol, glycerin, diglycerin, polyglycerin, trimethylol propane, 2-pyrrolidones having an alkyl group having a carbon atom number of from 1 to 8 at the 1-position, 3,5-dimethyl-1-hexyne-3-ol, 2,4, 7,9-tetramethyl-5-decyne-4,7-diol, propargyl alcohol (2-propyne-1-ol), 3-butyne-1-ol, 1-buty-ne-3-ol, 2-butyne-1,4-diol, and 3,6-dimethyl-4-octyne-3,6-diol.

Among these, 3-methoxy-3-methyl-1-butanol and 1-butoxy-2-propanol are especially preferred.

These solvents may be used singly or as an admixture of two or more kinds thereof. The content of these solvents in the dampening solution is preferably from 0.002 to 1% by weight, and more preferably from 0.005 to 0.5% by weight.

As the water soluble polymer, there are natural products or their modification products such as gum arabic, starch derivatives (for example, dextrin, enzymatic degradation dextrin, hydroxypropylated enzymatic degradation dextrin, carboxymethylated starch, phosphoric acid starch, or octenylsuccinic acid-modified starch), alginates and cellulose derivatives (for example, carboxymethylcellulose, carboxyethylcellulose, methylcellulose, or hydroxyethylcellulose); synthetic products such as polyethylene glycol or its copolymer, polyvinyl alcohol or its copolymer, polyacrylamide or its copolymer, polyacrylic acid or its copolymer, vinyl methyl ether-maleic anhydride copolymer and polystyrene sulfonic acid or its copolymer; and polyvinyl pyrrolidone. Among these, carboxymethylcellulose, and hydroxyethylcellulose are especially preferred. The water soluble polymer content of the dampening solution is preferably from 0.001 to 0.5% by weight, and more preferably from 0.005 to 0.2% by weight.

It is preferred that the dampening solution contains a chelating agent. Preferred examples of the chelating agent include ethylenediaminetetracetic acid or its sodium or potassium salt; diethylenetriaminepentacetic acid or its sodium or potassium salt; hydroxyethylethylene-diaminetriacetic acid or its sodium or potassium salt; nitrilotriacetic acid or its sodium salt; organic phosphonic acids or their salts such as 1-hydroxyethane-1,1-diphosphonic acid or its sodium or potassium salt, and aminotri-(methylenephosphonic acid) or its sodium or potassium salt; and phosphonoalkane tricarboxylic acids or their salts. As alternatives of the sodium or potassium salts, organic amine salts are also effective. Among these, those, which stably exist in a dampening solution and do not jeopardize printability, are employed. The chelating agent content of the dampening solution is suitably from 0.0001 to 0.5% by weight, and preferably from 0.0005 to 0.2% by weight.

As the antiseptic, there are formalin, imidazole derivatives, sodium dehydroacetate, 4-isothiazoline-3-on derivatives, benzotriazole derivatives, amidine or guanidine derivatives, diazine or triazole derivatives, oxazole or oxazine derivatives, and bromonitroalcohols such as bromonitropropanol, 1,1-dibromo-1-nitro-2-ethaol and 3-bromo-3-nitropentane-2,4-diol. The content of the antiseptic in the dampening solution, although different due to kinds of bacteria, mildew or ferment, is an amount effective to the bacteria, mildew or ferment and is preferably from 0.001 to 0.5% by weight. Two or more kinds of the antiseptic effective to bacteria, mildew or ferment are preferably used in combination.

The dampening solution may contain a deodorant, a colorant, an anti-rusting agent or an anti-foaming agent.

As the deodorant, a compound represented by formula (I) is preferably used.

Formula (I) R¹-COOR²

In formula (I), R¹ represents an alkyl group having a carbon atom number of from 1 to 15, an alkenyl group, an aralkyl group, or a phenyl group. The alkyl or alkenyl group has preferably a carbon atom number of from 4 to 8. The alkyl, alkenyl or aralkyl group of R¹ may be straight-chained or branched. The alkenyl group preferably has one double bond.

Examples of the aralkyl group include a benzyl group and phenylethyl group. One or more hydrogen atoms of the alkyl, alkenyl, aralkyl or phenyl group represented by R¹ may be substituted with a hydroxyl group or an acetyl group. R² represents an alkyl group having a carbon atom number of from 3 to 10, an aralkyl group, or a phenyl group, provided that the alkyl or aralkyl group may be straight-chained or branched. The alkyl group has preferably a carbon atom number of from 3 to 9. Examples of the aralkyl group include a benzyl group and a phenylethyl group.

Examples of the deodorant include esters of formic acid, acetic acid, propionic acid, butyric acid, isobutyric acid, 2-ethylbutyric acid, valeric acid, isovaleric acid, 2-methylvaleric acid, hexanoic acid (caproic acid), 4-methylpentanoic (isohexanoic acid), 2-hexenoic acid, 4-pentenoic acid, heptahoic acid, 2-methylheptanoic acid, octanoic acid (caprylic acid), nonanoic acid, decanoic acid (capric acid), 2-decenoic acid, lauric acid or myristic acid.

In addition to the above, there are benzyl phenylacetate and acetoacetic acid esters such as ethyl acetoacetate or 2-hexyl acetoacetate. Among these, n-pentyl acetate, isopentyl acetate, n-butyl butyrate, n-pentyl butyrate and isopentyl butyrate are preferred, and n-butyl butyrate, n-pentyl butyrate and isopentyl butyrate are preferred.

The content of the deodorant in the dampening solution is suitably from 0.001 to 0.5% by weight, and preferably from 0.002 to 0.2% by weight. The deodorant can improve working environment. Vanillin or ethylvanillin can be used with the above deodorant.

As the colorants, dyes for food are preferably used. Examples of yellow dyes include CI Nos. 19140, and 15985, examples of red dyes include CI Nos. 16185, 45430, 16255, 45380, and 45100, examples of violet dyes include CI No. 42640, examples of blue dyes include CI Nos. 42090 and 73015, and examples of green dyes include CI No. 42095. The colorant content of the dampening solution is preferably from 0.0001 to 0.5% by weight.

Examples of the anti-rusting agent include benzotriazole, 5-methylbenzotriazole, thiosalicylic acid, benzimidazole or their derivative. The anti-rusting agent content of the dampening solution is preferably from 0.0001 to 0.5% by weight.

The anti-foaming agent is preferably a silicon-containing anti-foaming agent, which may be of the emulsion type or of the solution type.

The dampening solution in the invention can contain alcohols in order to adjust the surface tension or viscosity and improve the printing performance.

Examples of the alcohols include methyl alcohol, ethyl alcohol, propyl alcohol, and isopropyl alcohol.

A constituent other that the components described above of the dampening solution in the invention is water. The dampening solution on the market is ordinarily a concentrated dampening solution. The concentrated dampening solution, which is comprised of the components described above, is prepared by dissolving the above solid components in water. The concentrated dampening solution is diluted with water by a factor of 10 to 200 on using.

In the invention, water giving a fluoride ion concentration of from 0 to 0.1 ppm in the dampening solution is preferably used. As a method removing a fluoride ion from water for dilution, there are a precipitation method and an absorption method. The precipitation method coagulates a fluoride ion in water by aluminum hydroxide to produce precipitates, whereby the fluoride ion is removed. The absorption method passes water through a vessel filled with an absorption agent, whereby the fluoride ion is filtered and removed. As the absorption agent, there are activated alumina, activated carbon, an ion-exchange resin and a reverse osmotic membrane.

In the invention, water giving a calcium ion concentration of from 0.01 to 40 ppm in the dampening solution is preferably used. In order to remove a calcium ion from water for dilution and obtain the dampening solution falling within the above calcium ion range, pure water, ion-exchanged water or water purified with a reverse osmotic membrane is preferably used.

The dampening solution can be used both in a conventional dampener and in a continuous feed dampening system, and is used preferably in the continuous feed dampening system. The dampening solution in the invention is applied to Mitsubishi Diamatic Dampener, Komorimatic Dampener, Dahlgren Dampener, or Alcolor Dampener manufactured by Heiderberg Co., Ltd.

### [Image Formation]

The planographic printing plate material of the invention is one having so-called on-press developability wherein it is mounted on a printing press after imagewise exposure without using special chemicals and supplied with dampening water and printing ink to remove unnecessary portions, followed by printing. In the preferred embodiment of the invention, the image formation layer of a thermal melt or fusion type planographic printing plate material forms oleophilic image portions at exposed portions and forms non-image portions at unexposed portions, the image formation layer at unexposed portions being removed. The image formation layer at unexposed portions can be removed by water, but is preferably subjected to so-called on-press development. Removal (on-press development) of the image formation layer at unexposed portions of a printing plate material mounted on a printing press plate cylinder can be carried out by bringing a dampening roller and an inking roller into contact with the image formation layer while rotating the plate cylinder. The sequence described later or other various sequences can be carried out.

The supplied amount of dampening solution may be adjusted to be greater or smaller than the amount ordinarily supplied in printing, and the adjustment may be carried out stepwise or continuously.

Sequence (1) A dampening roller is brought into contact with the image formation layer of a printing plate material on the plate cylinder during one to several tens of rotations of the plate cylinder, and then an inking roller brought into contact with the image formation layer during the next one to tens of rotations of the plate cylinder. Thereafter, printing is carried out.

Sequence (2) An inking roller is brought into contact with the image formation layer of a printing plate material on the plate cylinder during one to several tens of rotations of the plate cylinder, and then a dampening roller brought into contact with the image formation layer during the next one to tens of rotations of the plate cylinder. Thereafter, printing is carried out.

Sequence (3) An inking roller and a dampening roller are brought into contact with the image formation layer of a printing plate material on the plate cylinder during one to several tens of rotations of the plate cylinder. Thereafter, printing starts.

### EXAMPLES

The present invention will be explained below employing examples, but is not limited thereto. In the examples, "parts" is parts by weight, unless otherwise specified.

### Example

### [Manufacture of printing ink]

### (Manufacture of Varnish)

The following varnish composition was placed in a fourneck flask with a condenser, a thermometer, and a stirrer, heated to a temperature of 200 °C, and stirred for one hour at 200 °C to obtain a solution. Thereafter, 1 part of tolylene diisocyanate (TDI) was added to the resulting solution, and further stirred at 90 °C for 3 hours under nitrogen atmosphere. Thus, Varnish 1 and Varnish 2 for printing ink for offset printing were manufactured.

| (Composition of Varnish 1) | |
|---|---|
| Rosin-modified phenol resin (Mw: 100,000, Acid value: 15, produced by HITACHI KASEI POLYMER CO., LTD.) | 400 parts |
| Mineral oil | 59 parts |

| (Composition of Varnish 2) | |
|---|---|
| Rosin-modified phenol resin (Mw: 100,000, Acid value: 15, produced by HITACHI KASEI POLYMER CO., LTD.) | 400 parts |
| Linseed oil | 59 parts |

### <Manufacture of Printing ink 1>

Acrylic acid-modified vegetable oil A as a monomer, α-aminoacetophenone (produced by CIBA SPECIALTY CHEMICALS CO., LTD.) as a polymerization initiator, a polymerization inhibitor (t-butyl-hydroxytoluene, produced by ALBEMARLE CORPORATION), and pigment (Phthalocyanine Blue, produced by DAINICHI SEIKA KOGYO CO., LTD.) were added to the varnish 1 above in an amount as shown in composition of Printing ink 1 below (the addition amount of each component being represented in terms of parts), kneaded with a three roll kneader, and one part of oxidation polymerization catalyst (mixture of cobalt octylate and manganese octylate, produced by Shinto Fine CO., LTD.) was added thereto, and stirred for 1 hour. Thus, printing ink 1 was obtained, which contained the polymerizable oligomer.

### (Composition of Printing ink 1)

| | |
|---|---|
| Pigment Phthalocyanine Blue (produced by DAINICHI SEIKA KOGYO CO., LTD.) | 20.0 parts |
| Varnish 1 | 43.5 parts |
| Polymerizable monomer (Acrylic acid-modified vegetable oil A) | 30.0 parts |
| Polymerization initiator α-Aminoacetophenone (produced by CIBA SPECIALTY CHEMICALS CO., LTD.) | 5.0 parts |
| Polymerization inhibitor t-butylhydroxytoluene (produced by ALBEMARLE CORPORATION) | 0.5 parts |

### Acrylic acid-modified vegetable oil A

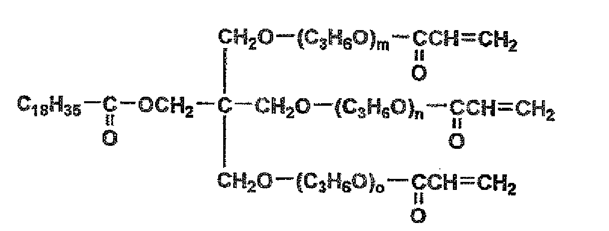

m+n+o = 3
Average molecular weight: 486

### (Manufacture of Printing ink 2)

Acrylic acid-modified vegetable oil A as a monomer, α-aminoacetophenone (produced by CIBA SPECIALTY CHEMICALS CO., LTD.) as a photopolymerization initiator, a polymerization inhibitor (t-butyl-hydroxytoluene, produced by ALBEMARLE CORPORATION), and pigment (Phthalocyanine Blue, produced by DAINICHI SEIKA KOGYO CO., LTD.) were added to the varnish 2 above in an amount as shown in composition of Printing ink 2 below (the addition amount of each component being represented in terms of parts), kneaded with a three roll kneader, and one part of oxidation polymerization catalyst (mixture of cobalt octylate and manganese octylate, produced by SHINTO FINE CO., LTD.) was added thereto, and stirred for 1 hour. Thus, Printing ink 2 was obtained, which contained the polymerizable oligomer and vegetable oil.

| (composition of Printing ink 2) | |
|---|---|
| Pigment Phthalocyanine Blue (produced by DAINICHI SEIKA KOGYO CO., LTD.) | 20.0 parts |
| Varnish 2 | 43.5 parts |
| Polymerizable monomer (Acrylic acid-modified vegetable oil A) | 30.0 parts |
| Polymerization initiator α-Aminoacetophenone (produced by CIBA SPECIALTY CHEMICALS CO., LTD.) | 5.0 parts |
| Polymerization inhibitor t-Butylhydroxytoluene (produced by ALBEMARLE CORPORATION) | 0.5 parts |

### <Manufacture of Printing ink 3>

Pigment (Phthalocyanine Blue, produced by DAINICHI SEIKA KOGYO CO., LTD.) was added to the varnish 1 above in an amount as shown in composition of Printing ink 3 below, kneaded with a bead mill, and kneaded with a three roll kneader. Thereafter, four parts by weight of polyethylene wax compound (Wax Compound, produced by SHAMROCK CO., LTD.), one part by weight of dryer, and five parts by weight of mineral oil were further added thereto, and stirred for 1 hour. Thus, Printing ink 3 was obtained, which did not contain any of a polymerizable monomer, a polymerizable oligomer and vegetable oil.

| (Composition of Printing ink 3) | |
|---|---|
| Pigment Phthalocyanine Blue (produced by DAINICHI SEIKA KOGYO CO., LTD.) | 20.0 parts |
| Varnish 1 | 70.0 parts |

### [Preparation of planographic printing plate material sample]

### (Preparation of aluminum support)

A 0.24 mm thick aluminum plate (material 1050, refining H16) was immersed in an aqueous 5% by weight sodium hydroxide solution at 65 °C for 1 minute for degreasing treatment, and washed with water. Subsequently, the aluminum plate was subjected to an electrolytic surface-roughening treatment in a 1% hydrochloric acid solution at 40 °C, at a current of 20 A for 20 seconds (400 A·sec/dm²), employing a carbon electrode, washed with water, and immersed (desmut-treated) in a 2% sodium oxide solution at 60°C for 60 seconds.

Subsequently, the resulting plate was subjected to anodization treatment according to the following conditions:
Processing bath: 30% by weight sulfuric acid solution
Current density: 2A/dm²
Temperature: 40 °C
Treatment time: 60 seconds

The resulting plate was immersed in 80 °C water for 30 seconds, dried at 40 °C to obtain a grained aluminum support.

The surface roughness Ra of this hydrophilic support was 0.34 µm, measured employing a surface roughness measuring device (RST PLUS produced by WYKO Co., Ltd.).

### (Preparation of Planographic printing plate material sample 1)

The following subbing layer coating solution 1 was coated on the aluminum support obtained above, employing a bar giving a coating amount of 7.5 ml/m², and dried in an oven at 80 °C for 10 seconds.

| (Subbing layer coating solution 1) | |
|---|---|
| Water | 15 g |
| Methanol | 135 g |
| Compound A | 0.7 g |

### Compound A

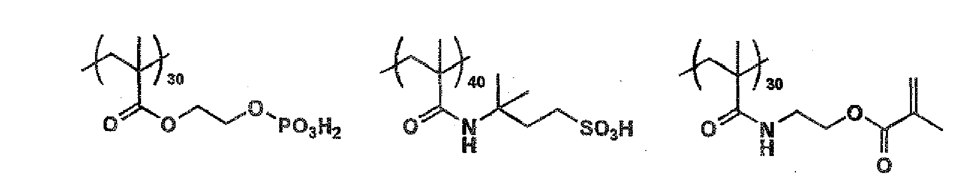

Subsequently, the following image formation layer coating solution 1 was coated employing a wire bar, and dried in an oven at 100 °C for 60 seconds to form an image formation layer with a dry coating amount of 1.0 g/m². Thus, Planographic printing plate material sample 1 was prepared. Image formation layer coating solution 1

| | |
|---|---|
| Infrared absorbing agent (1) | 0.05 g |
| Polymerization initiator (PS-1) | 0.2 g |
| Binder polymer (1) (Average molecular weight 80,000) | 0.5 g |
| Polymerizable compound (Isocyanuric acid EO-modified triacrylate, produced by Shinnakamura Kagaku Kogyo Co., Ltd., NK Ester M-315) | 1.0 g |
| Naphthalenesulfonic acid salt of Victoria Pure Blue | 0.02 g |
| Fluorine-contained surfactant (1) | 0.1 g |
| Methyl ethyl ketone | 18.0 g |

### Infrared absorbing agent (1)

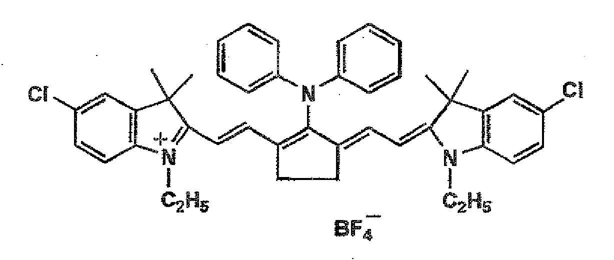

### Polymerization initiator PS-1

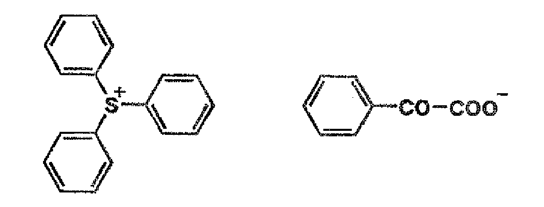

### Fluorine-contained surfactant (1)

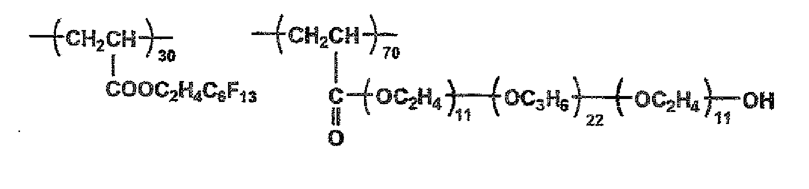

### Binder polymer (1)

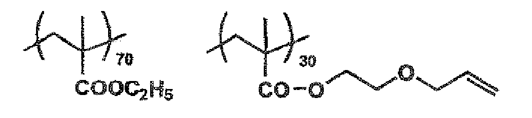

### (Preparation of Planographic printing plate material sample 2)

The following subbing layer coating solution 2 was coated on the aluminum support obtained above, employing a bar giving a coating amount of 7.5 ml/m², and dried in an oven at 80°C for 10 seconds.

| (Subbing layer coating solution 2) | |
|---|---|
| Water | 15 g |
| Methanol | 135 g |
| Compound B | 0.7 g |
| Compound B: CH₂=C(CH₃) COO (C₂H₄O)ₙP=O (OH)₂ | |

Subsequently, the following image formation layer coating solution 2 was coated on the subbed support obtained above, employing a wire bar, and dried in an oven at 70 °C for 60 seconds to form an image formation layer with a dry coating amount of 0.9 g/m².

| Image formation layer coating solution 2 | |
|---|---|
| Watwer | 40 g |
| Propylene glycol monomethyl ether | 50 g |
| Methyl ethyl ketone | 10 g |
| Infrared absorbing dye (3) | 0.15 g |
| Binder polymer (2) (Average molecular weight 80,000) | 0.5 g |
| Microcapsule dispersion solution | 5 g (in terms of solid content) |
| Polymerization initiator (PS-1) | 0.5 g |
| Fluorine-contained surfactant (1) | 0.1 g |
| Infrared absorbing agent (3) | |

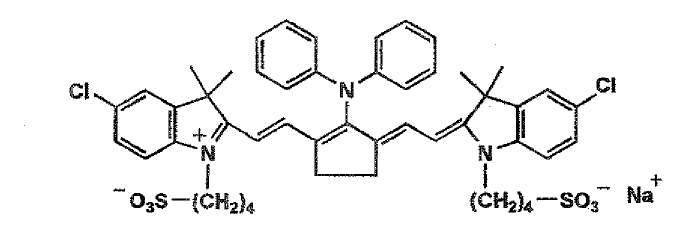

### Binder polymer (2)

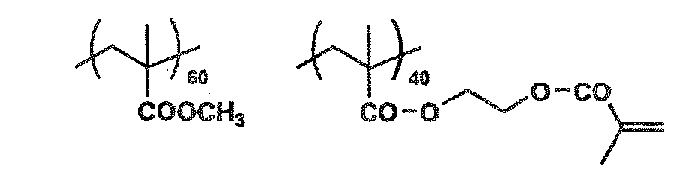

Subsequently, the following protective layer coating solution 1 was coated on the image formation layer, employing a wire bar, and dried in an oven at 60 °C for 30 seconds to form a protective layer with a dry coating amount of 0.3 g/m². Thus, Planographic printing plate material sample 2 was prepared.

| Protective layer coating solution 1 | |
|---|---|
| Sodium polyacrylate aqueous solution (Trade name, AQUALIC DL522, produced by Nippon Shokubai Co., Ltd., solid content: 30% by weight, water-soluble resin) | 15 parts |
| Blocked isocyanate WB-700 | 40 parts |
| Aqueous solution of trehalose powder, Treha (mp. 97° C, produced by Hayashihara Shoji Co., Ltd.) having a solid content of 10% by weight | 35 parts |
| Blue dye (Trade Name: Aoiro nigo, produced by Kiriya Chemical Co., Ltd.) | 2 parts |
| Matting agent: Monodisperse silica particles with an average particle size of 8 µm | 3 parts |
| Matting agent Monodisperse silica particles with an average particle size of 3-5 µm | 5 parts |

### Blue dye

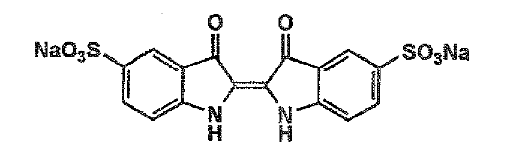

### (Preparation of prints)

The resulting planographic printing plate material samples were imagewise exposed based on image data, employing a 830 nm semiconductor laser (with a beam spot diameter of 10 µm, at a resolution of 2000 dpi in the scanning and subscanning directions) at exposure energy on the sample surface of 150 mJ/cm². Herein, "dpi" means a dot number per 2.54 cm. The image data contained a solid image and a dot image with a dot area of from 1 to 99%.

Each of the above exposed planographic printing plate material samples was mounted on a plate cylinder of a DAIYA 1F-1 type printing press produced by Mitsubishi Jukogyo Co., Ltd. The mounted sample was made to contact a dampening roller and supplied with the following dampening solution 1 during two revolutions of the cylinder, and then made to contact an ink roller and supplied with printing ink 1, 2 or 3 shown in Table 1, during two revolutions of the cylinder. Successively, the sample remained in contact with the dampening roller and the ink roller, and printing paper sheets were fed and printing was initiated.

Immediately after printing, the printed matter was exposed to UV light to dry the printing ink. Thus, prints were obtained.

| Dampening solution 1 | |
|---|---|
| Propylene glycol mono-n-butyl ether | 1.0 kg |
| 1,2-Propane diol | 0.5 kg |
| 3,6-Dimethyl-4-octine-3,6-diol | 0.5 kg |
| Perfluorooctanesulfonic acid | 0.1 kg |
| Ethylenediamine tetramethylenephosphonic acid | 0.8 kg |
| Ethylene oxide-propylene oxide copolymer | 0.1 kg |
| Glycerin | 0.1 kg |
| Ammonium nitrate | 0.02 kg |
| Carboxymethylcellulose | 0.01 kg |
| Ammonium dihydrogen phosphate | 0.4 kg |
| Diammonium citrate | 0.01 kg |
| Sodium acetate | 0.01 kg |
| 2,3-Bromo-2-nitroethanol | 0.002 kg |
| 2-Methyl-5-chloro-4-isothazoline-3-one | 0.002 kg |

| | |
|---|---|
| Water was added to make a 10 liter solution. | |

### [Evaluation of prints]

### (Dot quality, image quality of prints)

Printing was carried out employing coated paper sheets to obtain 5000 prints. The dot image with a dot area of 2% was observed through a 100-power loupe, and evaluated according to the following rankings. Ranking 5 indicates a high quality dot image without fringes, ranking number dropping simply with lowering of dot quality. Ranking less than ranking 3 indicates that the dot image quality is totally off from practical use.

### (Printing fault)

The planographic printing plate material sample obtained above was exposed through an original having an image having a dot area of 70% with a screen line number of 175. The exposed printing plate material sample was mounted on the printing press described above, and printing was carried out supplying the dampening solution described above and printing ink as shown in Table 1 to the printing plate material sample. Images were printed on an obverse surface of a fresh wood-free paper sheet, while spraying, on the paper sheet obverse surface, powder Nikkariko AS-60 (with an average particle size of from 20 to 30 µm, produced by Nikka Ltd.), and then on the rear surface of the printing paper sheet having the printed image on the obverse surface to obtain 1000 prints.

The 1000^{th} printed sheet was observed for evaluation of printing fault, and evaluated according to the following rankings. Ranking 5 indicates an image without printing fault, ranking number dropping simply with increase of printing fault. Printed image providing ranking less than ranking 3 is totally off from practical use.

### (Ink stain elimination, property)

Printing was carried out employing the exposed planographic printing plate material sample obtained above and coated paper sheets to obtain 1000 prints. After that, only the ink roller was bought into contact with the exposed printing plate material sample to form an ink layer on the entire surface of the sample, and then conventional printing was carried out supplying dampening water and printing ink onto the resulting sample via the dampening roller and the ink roller. The number of paper sheets printed from the beginning of conventional printing until a print without ink stain at non-image portions was obtained was counted, and evaluated as a measure of ink stain elimination property. The less the number is, the better the ink stain elimination property.

The results are shown in Table 1.

**Table 1**

| Print No. | Planographic printing plate material sample No. | Ink No. | Dot quality | Printing Fault | Ink stain elimination property | Remarks |
|---|---|---|---|---|---|---|
| 1 | 1 | 3 | 2 | 2 | 300 | Comp. |
| 2 | 2 | 3 | 2 | 2 | 300 | Comp. |
| 3 | 1 | 1 | 5 | 4 | 30 | Inv. |
| 4 | 1 | 2 | 5 | 4 | 30 | Inv. |
| 5 | 2 | 1 | 5 | 5 | 50 | Inv. |
| 6 | 2 | 2 | 5 | 5 | 50 | Inv. |

| | | | | | | |
|---|---|---|---|---|---|---|
| Comp.: Comparative, Inv.: Inventive | | | | | | |

As is apparent from Table 1, inventive prints according to the printing process of the invention are excellent in dot quality and ink stain elimination property and are difficult to produce printing fault, as compared with comparative prints.

## Claims

1. A planographic printing plate material comprising an aluminum support and provided thereon, an image formation layer containing a light-to-heat conversion material, a photopolymerizable compound and a polymerization initiator, **characterized in that** non-image portions of the image formation layer after imagewise exposure can be removed by supplying printing ink containing at least one selected from a polymerizable monomer and a polymerizable oligomer.

2. A planographic printing plate material comprising an aluminum support and provided thereon, an image formation layer containing a light-to-heat conversion material, a photopolymerizable compound and a polymerization initiator, **characterized in that** the image formation layer can be removed on a printing press by printing ink containing at least one selected from a polymerizable monomer and a polymerizable oligomer.

3. The planographic printing plate material of claim 1 or 2, **characterized in that** the aluminum support has a hydrophilic surface.

4. The planographic printing plate material of any one of claims 1 through 3, **characterized in that** the printing ink further contains vegetable oil.

5. A planographic printing plate **characterized in that** it is prepared by imagewise exposing a planographic printing plate material comprising an aluminum support and provided thereon, an image formation layer containing a light-to-heat conversion material, a photopolymerizable compound, and a polymerization initiator, and supplying printing ink containing at least one selected from a polymerizable monomer and a polymerizable oligomer to the exposed planographic printing plate material.

6. The planographic printing plate of claim 5, **characterized in that** the aluminum support has a hydrophilic surface.

7. The planographic printing plate of claim 5 or 6, **characterized in that** the printing ink further contains vegetable oil.

8. A process of preparing a planographic printing plate **characterized in that** the process prepares the planographic printing plate of any one of claims 5 through 7, and the printing ink containing at least one selected from a polymerizable monomer and a polymerizable oligomer.

9. A printing process employing a planographic printing plate **characterized in that** the process comprises supplying printing ink containing at least one selected from a polymerizable monomer and a polymerizable oligomer to the planographic printing plate of any one of items 5 through 7, whereby printing is conducted.
